(19)

**Europäisches Patentamt**

**European Patent Office**

**Office européen des brevets**

(11) **EP 4 503 794 A1**

(12) **EUROPEAN PATENT APPLICATION**
published in accordance with Art. 153(4) EPC

(43) Date of publication:
05.02.2025 Bulletin 2025/06

(21) Application number: 22933163.2

(22) Date of filing: 14.12.2022

(51) International Patent Classification (IPC):
*H04W 72/04* (2023.01)

(52) Cooperative Patent Classification (CPC):
H04L 5/00; H04W 72/04; H04W 72/0446;
H04W 72/0453; H04W 72/23

(86) International application number:
PCT/CN2022/138901

(87) International publication number:
WO 2023/179114 (28.09.2023 Gazette 2023/39)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 24.03.2022 CN 202210302779

(71) Applicant: **Datang Mobile Communications
Equipment Co., Ltd.
Beijing 100085 (CN)**

(72) Inventors:
• **SONG, Lei
Beijing 100085 (CN)**
• **GAO, Qiubin
Beijing 100085 (CN)**
• **SU, Xin
Beijing 100085 (CN)**
• **HUANG, Qiuping
Beijing 100085 (CN)**

(74) Representative: **Cabinet Nony
11 rue Saint-Georges
75009 Paris (FR)**

(54) **REFERENCE SIGNAL TRANSMISSION METHOD, APPARATUS AND STORAGE MEDIUM**

(57) A reference signal transmission method, an apparatus and a storage medium. A sending device generates a sequence of demodulation reference signals; and the sending device maps the sequence of the demodulation reference signals to time-frequency resources of the demodulation reference signals for transmission, the time-frequency resources includes time-frequency resources corresponding to a first CDM group, the first CDM group corresponds to at most eight antenna ports, each of the at most eight antenna ports corresponds to at most four frequency domain weightings and at most two time domain weightings, and antenna port weightings of a first antenna port and a second antenna port in the at most eight antenna ports are orthogonal.

FIG. 4

**Description**

**CROSS-REFERENCE TO RELATED APPLICATIONS**

The present disclosure claims the priority of the Chinese patent application No.202210302779.7 filed to the CNIPA on March 24, 2022, and entitled "Reference Signal Transmission Method, Apparatus and Storage Medium", of which the entire contents are incorporated herein by reference.

**TECHNICAL FIELD**

The present disclosure relates to the technical field of wireless communications, in particular to a reference signal transmission method, an apparatus and a storage medium.

**BACKGROUND OF THE INVENTION**

In a new radio access technology (NR) system, a demodulation reference signal (DMRS) is defined for performing channel estimation, and then performing data demodulation of a physical uplink shared channel (PUSCH) or a physical downlink shared channel (PDSCH).

An uplink DMRS and a downlink DMRS of the current NR system include two types: a first configuration type DMRS (Type 1 DMRS) and a second configuration type DMRS (Type 2 DMRS). The Type 1 DMRS may support a maximum of eight DMRS ports, i.e., 8-layer data stream transmission may be supported, and the Type 2 DMRS may support a maximum of twelve DMRS ports, that is, 12-layer data stream transmission may be supported. With the increase of the number of terminals, a transmission requirement also gradually increases, and still limiting the maximum number of transmission layers to 12 may hinder the increase of a system capacity, thereby reducing user experience of the terminals.

**SUMMARY**

Embodiments of the present disclosure provide a reference signal transmission method, an apparatus, and a storage medium, to increase the number of antenna ports corresponding to a code division multiplexing (CDM) group, thereby increasing the maximum number of transmission layers.

In a first aspect, a reference signal transmission method is provided and includes:

Generating, by a sending device, a sequence of demodulation reference signals; and

mapping, by the sending device, the sequence of the demodulation reference signals to time-frequency resources of the demodulation reference signals for transmission, wherein the time-frequency resources comprises time-frequency resources corresponding to a first CDM group, the first CDM group corresponds to at most eight antenna ports, each of the at most eight antenna ports corresponds to at most four frequency domain weightings and at most two time domain weightings, wherein antenna port weightings of a first antenna port and a second antenna port in the at most eight antenna ports are orthogonal.

Alternatively, there is a corresponding relationship between an antenna port index corresponding to the demodulation reference signals, a CDM group subcarrier offset and antenna port weightings, wherein the antenna port weightings include four frequency domain weightings and at most two time domain weightings.

Alternatively, the eight antenna ports corresponding to the first CDM group include the first antenna port to an eighth antenna port, and four frequency domain weightings and at most two time domain weightings respectively corresponding to the first antenna port to the eighth antenna port include:

| Antenna port | $w_f(k')$ | | | | $w_t(l')$ | |
|---|---|---|---|---|---|---|
| | $k' = k_0$ | $k' = k_1$ | $k' = k_2$ | $k' = k_3$ | $l' = l'_0$ | $l' = l'_1$ |
| First antenna port | +1 | +1 | +1 | +1 | +1 | +1 |
| Second antenna port | +1 | -1 | +1 | -1 | +1 | +1 |
| Third antenna port | +1 | +1 | +1 | +1 | +1 | -1 |
| Fourth antenna port | +1 | -1 | +1 | -1 | +1 | -1 |
| Fifth antenna port | +1 | -1 | -1 | +1 | +1 | +1 |
| Sixth antenna port | +1 | +1 | -1 | -1 | +1 | +1 |
| Seventh antenna port | +1 | -1 | -1 | +1 | +1 | -1 |

(continued)

| Antenna port | wf(k') | | | | wt(l') | |
|---|---|---|---|---|---|---|
| | k' = k0 | k' = k1 | k' = k2 | k' = k3 | l' = l'0 | l' = l'1 |
| Eighth antenna port | +1 | +1 | -1 | -1 | +1 | -1 |

or,

| Antenna port | wf(k') | | | | wt(l') | |
|---|---|---|---|---|---|---|
| | k' = k0 | k' = k1 | k' = k2 | k' = k3 | l' = l'0 | l' = l'1 |
| First antenna port | +1 | +1 | +1 | +1 | +1 | +1 |
| Second antenna port | +1 | -1 | +1 | -1 | +1 | +1 |
| Third antenna port | +1 | +1 | +1 | +1 | +1 | -1 |
| Fourth antenna port | +1 | -1 | +1 | -1 | +1 | -1 |
| Fifth antenna port | -1 | -1 | +1 | +1 | +1 | +1 |
| Sixth antenna port | -1 | +1 | +1 | -1 | +1 | +1 |
| Seventh antenna port | -1 | -1 | +1 | +1 | +1 | -1 |
| Eighth antenna port | -1 | +1 | +1 | -1 | +1 | -1 |

wherein, $w_f(k')$ is the frequency domain weighting, $w_t(l')$ is the time domain weighting, $k'$ is a first weighting index of the demodulation reference signals, and $l'$ is a second weighting index of the demodulation reference signals.

Alternatively, the first weighting index is used for determining a subcarrier position of the demodulation reference signals, and the second weighting index is used for determining a symbol position of the demodulation reference signals.

Alternatively, $l'_0 = 0$, frequency domain weightings of specific antenna ports among the first antenna port to the eighth antenna port are orthogonal; or, $l'_1 = 1$, the frequency domain weightings of the specific antenna ports among the first antenna port to the eighth antenna port are orthogonal; or $l'_0 = 0$, $l'_1 = 1$, inner products of the frequency domain weightings and time domain weightings of the specific antenna ports among the first antenna port to the eighth antenna port are orthogonal.

Alternatively, $k_0 = 0$, $k_1 = 1$, $k_2 = 6$, $k_3 = 7$; or, $k_0 = 0$, $k_1 = 1$, $k_2 = 2$, $k_3 = 3$.

Alternatively, the time-frequency resources of the demodulation reference signals further include time-frequency resources corresponding to a second CDM group, the second CDM group corresponds to at most eight antenna ports, and each of the eight antenna ports corresponds to four frequency domain weightings and at most two time domain weightings.

Alternatively, the antenna ports corresponding to the first CDM group and the second CDM group include:

an index of the antenna ports corresponding to the first CDM group including: $p_b + \{0,1,2,3,8,9,10,11\}$; and
an index of the antenna ports corresponding to the second CDM group including: $p_b + \{4,5,6,7,12,13,14,15\}$;
or, the antenna ports corresponding to the first CDM group and the second CDM group include:

the index of the antenna ports corresponding to the first CDM group including: $p_b + \{0,1,4,5,8,9,12,13\}$;
the index of the antenna ports corresponding to the second CDM group including: $p_b + \{2,3,6,7,10,11,14,15\}$; and
when the demodulation reference signals are uplink signals, $p_b = 0$, and when the demodulation reference signals are downlink signals, $p_b = 1000$.

Alternatively, mapping, by the sending device, the sequence of the demodulation reference signals to the time-frequency resources of the demodulation reference signals includes: mapping, by the sending device, the sequence of the demodulation reference signals to the time-frequency resources of the demodulation reference signals according to the corresponding relationship among the antenna port index corresponding to the demodulation reference signals, the CDM group subcarrier offset and the port weightings of the demodulation reference signals based on the following formula:

$$\alpha_{k,l}^{(p,\mu)} = \beta_{DMRS} w_f(k') w_t(l') r(cn + k')$$

$$k = dn + 2k' + \Delta$$

$$k' = 0,1,2,3$$

$$l = \bar{l} + l'$$

$$n = 0,1,...$$

wherein, $\alpha_{k,l}^{(p,\mu)}$ is a value of the sequence of the demodulation reference signals mapped on a first RE (k, l), and the first RE (k, l) has a subcarrier index of k, and a symbol index of l; $\beta_{DMRS}$ is an amplitude scale factor; $w_f(k')$ is the frequency domain weighting, and $w_t(l')$ is the time domain weighting; $r(cn + k')$ is the sequence of the DMRS; $\Delta$ is the CDM group subcarrier offset; 1 is an index of a start symbol of the demodulation reference signals, k' is the first weighting index of the demodulation reference signals, and l' is the second weighting index of the demodulation reference signals; $\mu$ is a subcarrier spacing; and c=4, and d=8.

Alternatively, the time-frequency resources of the demodulation reference signals further include time-frequency resources corresponding to a second CDM group and time-frequency resources corresponding to a third CDM group, the second CDM group and the third CDM group respectively correspond to at most eight antenna ports, and each of the eight antenna ports corresponds to four frequency domain weightings and at most two time domain weightings.

Alternatively, the antenna ports corresponding to the first CDM group, the second CDM group and the third CDM group include:

an index of the antenna ports corresponding to the first CDM group including: $p_b$ + {0,1,6,7,12,13,18,19};
an index of the antenna ports corresponding to the second CDM group including: $p_b$ + {2,3,8,9,14,15,20,21}; and
an index of the antenna ports corresponding to the third CDM group including: $p_b$ + {4,5,10,11,16,17,22,23};
or, the antenna ports corresponding to the first CDM group, the second CDM group and the third CDM group include:

the index of the antenna ports corresponding to the first CDM group including: $p_b$ + {0,1,2,3,12,13,14,15};
the index of the antenna ports corresponding to the second CDM group including: $p_b$ + {4,5,6,7,16,17,18,19}; and
the index of the antenna ports corresponding to the third CDM group including: $p_b$ + {8,9,10,11,20,21,22,23}, wherein
when the demodulation reference signals are uplink signals, $p_b$ = 0, and when the demodulation reference signals are downlink signals, $p_b$ = 1000.

Alternatively, mapping, by the sending device, the sequence of the demodulation reference signals to the time-frequency resources of the demodulation reference signals includes: mapping, by the sending device, the sequence of the demodulation reference signals to the time-frequency resources of the demodulation reference signals according to the corresponding relationship among the antenna port index corresponding to the demodulation reference signals, the CDM group subcarrier offset and the port weightings of the demodulation reference signals based on the following formula:

$$\alpha_{k,l}^{(p,\mu)} = \beta_{DMRS} w_f(k') w_t(l') r(cn + k')$$

$$k = dn + k' + \Delta$$

$$k' = 0,1,6,7$$

$$l = \bar{l} + l'$$

$$n = 0,1,...$$

wherein, $\alpha_{k,l}^{(p,\mu)}$ is a value of the sequence of the demodulation reference signals mapped on a first RE (k, l), and the first RE (k, l) has a subcarrier index of k, and a symbol index of l; $\beta_{DMRS}$ is an amplitude scale factor; $w_f(k')$ is a frequency domain

weighting, and $w_t(l')$ is a time domain weighting; $r(cn + k')$ is the sequence of the DMRS; $\Delta$ is the CDM group subcarrier offset; $\bar{l}$ is an index of a start symbol of the demodulation reference signals, $k'$ is a first weighting index of the demodulation reference signals, and $l'$ is a second weighting index of the demodulation reference signals; $\mu$ is a subcarrier spacing; and $c=2$ or 4, and $d=12$.

Alternatively, mapping, by the sending device, the sequence of the demodulation reference signals to the time-frequency resources of the demodulation reference signals includes: mapping, by the sending device, the sequence of the demodulation reference signals to the time-frequency resources of the demodulation reference signals according to the corresponding relationship among the antenna port index corresponding to the demodulation reference signals, the CDM group subcarrier offset and the port weightings of the demodulation reference signals based on the following formula:

$$\alpha_{k,l}^{(p,\mu)} = \beta_{DMRS} w_{\mathrm{f}}(k') w_{\mathrm{t}}(l') r(cn + k')$$

$$k = dn + k'' + \Delta$$

$$k' = 0,1,2,3$$

$$l = \bar{l} + l'$$

$$n = 0,1, \dots$$

wherein, $\alpha_{k,l}^{(p,\mu)}$ is a value of the sequence of the demodulation reference signals mapped on a first RE (k, l), and the first RE (k, l) has a subcarrier index of k, and a symbol index of l; $\beta_{DMRS}$ is an amplitude scale factor; $w_{\mathrm{f}}(k')$ is a frequency domain weighting, and $w_{\mathrm{t}}(l')$ is a time domain weighting; $r(cn + k')$ is the sequence of the DMRS; $\Delta$ is the CDM group subcarrier offset; $\bar{l}$ is an index of a start symbol of the demodulation reference signals, $k'$ is a first weighting index of the demodulation reference signals, and $l'$ is a second weighting index of the demodulation reference signals; $c=4$, and $d=12$, $\mu$ is a subcarrier spacing; and a corresponding relationship between $k''$ and $k'$ includes:

| k' | k'' |
|----|-----|
| 0  | 0   |
| 1  | 1   |
| 2  | 6   |
| 3  | 7   |

wherein, when $k' = 0$ or 1, $k'' = k'$, and when $k' = 2$ or 3, $k'' = k' + 4$.

In a second aspect, a reference signal transmission method is provided and includes:

receiving, by a receiving device, demodulation reference signals sent by a sending device on time-frequency resources of the demodulation reference signals, the time-frequency resources comprises time-frequency resources corresponding to a first CDM group, the first CDM group corresponds to at most eight antenna ports, each of the at most eight antenna ports corresponds to at most four frequency domain weightings and at most two time domain weightings, and antenna port weightings of a first antenna port and a second antenna port in the at most eight antenna ports are orthogonal; and

obtaining, by the receiving device, a sequence of the demodulation reference signals.

Alternatively, there is a corresponding relationship between an antenna port index corresponding to the demodulation reference signals, a CDM group subcarrier offset and antenna port weightings, wherein the antenna port weightings include four frequency domain weightings and at most two time domain weightings.

Alternatively, the eight antenna ports corresponding to the first CDM group include the first antenna port to an eighth antenna port, and four frequency domain weightings and at most two time domain weightings respectively corresponding to the first antenna port to the eighth antenna port include:

| Antenna port | $w_f(k')$ | | | | $w_t(l')$ | |
|---|---|---|---|---|---|---|
| | $k' = k_0$ | $k' = k_1$ | $k' = k_2$ | $k' = k_3$ | $l' = l'_0$ | $l' = l'_1$ |
| First antenna port | +1 | +1 | +1 | +1 | +1 | +1 |
| Second antenna port | +1 | -1 | +1 | -1 | +1 | +1 |
| Third antenna port | +1 | +1 | +1 | +1 | +1 | -1 |
| Fourth antenna port | +1 | -1 | +1 | -1 | +1 | -1 |
| Fifth antenna port | +1 | -1 | -1 | +1 | +1 | +1 |
| Sixth antenna port | +1 | +1 | -1 | -1 | +1 | +1 |
| Seventh antenna port | +1 | -1 | -1 | +1 | +1 | -1 |
| Eighth antenna port | +1 | +1 | -1 | -1 | +1 | -1 |

or,

| Antenna port | $w_f(k')$ | | | | $w_t(l')$ | |
|---|---|---|---|---|---|---|
| | $k' = k_0$ | $k' = k_1$ | $k' = k_2$ | $k' = k_3$ | $l' = l'_0$ | $l' = l'_1$ |
| First antenna port | +1 | +1 | +1 | +1 | +1 | +1 |
| Second antenna port | +1 | -1 | +1 | -1 | +1 | +1 |
| Third antenna port | +1 | +1 | +1 | +1 | +1 | -1 |
| Fourth antenna port | +1 | -1 | +1 | -1 | +1 | -1 |
| Fifth antenna port | -1 | -1 | +1 | +1 | +1 | +1 |
| Sixth antenna port | -1 | +1 | +1 | -1 | +1 | +1 |
| Seventh antenna port | -1 | -1 | +1 | +1 | +1 | -1 |
| Eighth antenna port | -1 | +1 | +1 | -1 | +1 | -1 |

wherein, $w_f(k')$ is the frequency domain weighting, $w_t(l')$ is the time domain weighting, k' is a first weighting index of the demodulation reference signals, and l' is a second weighting index of the demodulation reference signals.

Alternatively, the first weighting index is used for determining a subcarrier position of the demodulation reference signals, and the second weighting index is used for determining a symbol position of the demodulation reference signals.

Alternatively, $l'_0 = 0$, frequency domain weightings of specific antenna ports among the first antenna port to the eighth antenna port are orthogonal; or, $l'_1 = 1$, the frequency domain weightings of the specific antenna ports among the first antenna port to the eighth antenna port are orthogonal; or $l'_0 = 0$, $l'_1 = 1$, inner products of the frequency domain weightings and time domain weightings of the specific antenna ports among the first antenna port to the eighth antenna port are orthogonal.

Alternatively, $k_0 = 0$, $k_1 = 1$, $k_2 = 6$, $k_3 = 0$; or, $k_0 = 0$, $k_1 = 1$, $k_2 = 2$, $k_3 = 3$.

Alternatively, the time-frequency resources of the demodulation reference signals further include time-frequency resources corresponding to a second CDM group, the second CDM group corresponds to at most eight antenna ports, and each of the eight antenna ports corresponds to four frequency domain weightings and at most two time domain weightings.

Alternatively, the antenna ports corresponding to the first CDM group and the second CDM group include:

an index of the antenna ports corresponding to the first CDM group including: $p_b + \{0,1, 2, 3, 8,9,10,11\}$; and
an index of the antenna ports corresponding to the second CDM group including: $p_b + \{4,5,6,7,12,13,14,15\}$;
or, the antenna ports corresponding to the first CDM group and the second CDM group include:

the index of the antenna ports corresponding to the first CDM group including: $p_b + \{0,1,4, 5, 8,9,12,13\}$; and
the index of the antenna ports corresponding to the second CDM group including: $p_b + \{2,3,6,7,10,11,14,15\}$, wherein
when the demodulation reference signals are uplink signals, $p_b = 0$, and when the demodulation reference signals are downlink signals, $p_b = 1000$.

Alternatively, mapping, by the sending device, the sequence of the demodulation reference signals to the time-frequency resources of the demodulation reference signals includes: mapping, by the sending device, the sequence of the demodulation reference signals to the time-frequency resources of the demodulation reference signals according to the corresponding relationship among the antenna port index corresponding to the demodulation reference signals, the CDM group subcarrier offset and the port weightings of the demodulation reference signals based on the following formula:

$$\alpha_{k,l}^{(p,\mu)} = \beta_{DMRS} w_{\mathrm{f}}(k') w_{\mathrm{t}}(l') r(cn + k')$$

$$k = dn + 2k' + \Delta$$

$$k' = 0,1,2,3$$

$$l = \bar{l} + l'$$

$$n = 0,1,\dots$$

wherein, $\alpha_{k,l}^{(p,\mu)}$ is a value of the sequence of the demodulation reference signals mapped on a first RE (k, l), and the first RE (k, l) has a subcarrier index of k, and a symbol index of l; $\beta_{DMRS}$ is an amplitude scale factor; $w_{\mathrm{f}}(k')$ is the frequency domain weighting, and $w_{\mathrm{t}}(l')$ is the time domain weighting; $r(cn + k')$ is the sequence of the DMRS; $\Delta$ is the CDM group subcarrier offset; $\bar{l}$ is an index of a start symbol of the demodulation reference signals, k' is the first weighting index of the demodulation reference signals, and l' is the second weighting index of the demodulation reference signals; $\mu$ is a subcarrier spacing; and c=4, and d=8.

Alternatively, the time-frequency resources of the demodulation reference signals further include time-frequency resources corresponding to a second CDM group and time-frequency resources corresponding to a third CDM group, the second CDM group and the third CDM group respectively correspond to at most eight antenna ports, and each of the eight antenna ports corresponds to four frequency domain weightings and at most two time domain weightings.

Alternatively, the antenna ports corresponding to the first CDM group, the second CDM group and the third CDM group include:

an index of the antenna ports corresponding to the first CDM group including: $p_b$ + {0,1,6,7,12,13,18,19};
an index of the antenna ports corresponding to the second CDM group including: $p_b$ + {2,3,8,9,14,15,20,21}; and
an index of the antenna ports corresponding to the third CDM group including: $p_b$ + {4,5,10,11,16,17,22,23};
or, the antenna ports corresponding to the first CDM group, the second CDM group and the third CDM group include:

the index of the antenna ports corresponding to the first CDM group including: $p_b$ + {0,1,2,3,12,13,14,15};
the index of the antenna ports corresponding to the second CDM group including: $p_b$ + {4,5,6,7,16,17,18,19}; and
the index of the antenna ports corresponding to the third CDM group including: $p_b$ + {8, 9,10,11,20,21,22,2 3},
wherein
when the demodulation reference signals are uplink signals, $p_b$ = 0, and when the demodulation reference signals are downlink signals, $p_b$ = 1000.

Alternatively, mapping, by the sending device, the sequence of the demodulation reference signals to the time-frequency resources of the demodulation reference signals includes: mapping, by the sending device, the sequence of the demodulation reference signals to the time-frequency resources of the demodulation reference signals according to the corresponding relationship among the antenna port index corresponding to the demodulation reference signals, the CDM group subcarrier offset and the port weightings of the demodulation reference signals based on the following formula:

$$\alpha_{k,l}^{(p,\mu)} = \beta_{DMRS} w_{\mathrm{f}}(k') w_{\mathrm{t}}(l') r(cn + k')$$

$$k = dn + k' + \Delta$$

$$k' = 0,1,6,7$$

$$l = \bar{l} + l'$$

$$n = 0,1, \ldots$$

wherein, $\alpha_{k,l}^{(p,\mu)}$ is a value of the sequence of the demodulation reference signals mapped on a first RE (k, l), and the first RE (k, l) has a subcarrier index of k, and a symbol index of l; $\beta_{DMRS}$ is an amplitude scale factor; $w_f(k')$ is a frequency domain weighting, and $w_t(l')$ is a time domain weighting; $r(cn + k')$ is the sequence of the DMRS; $\Delta$ is the CDM group subcarrier offset; $\bar{l}$ is an index of a start symbol of the demodulation reference signals, k' is a first weighting index of the demodulation reference signals, and l' is a second weighting index of the demodulation reference signals; $\mu$ is a subcarrier spacing; and c=2 or 4, and d=12.

Alternatively, mapping, by the sending device, the sequence of the demodulation reference signals to the time-frequency resources of the demodulation reference signals includes: mapping, by the sending device, the sequence of the demodulation reference signals to the time-frequency resources of the demodulation reference signals according to the corresponding relationship among the antenna port index corresponding to the demodulation reference signals, the CDM group subcarrier offset and the port weightings of the demodulation reference signals based on the following formula:

$$\alpha_{k,l}^{(p,\mu)} = \beta_{DMRS} w_f(k') w_t(l') r(cn + k')$$

$$k = dn + k'' + \Delta$$

$$k' = 0,1,2,3$$

$$l = \bar{l} + l'$$

$$n = 0,1, \ldots$$

wherein, $\alpha_{k,l}^{(p,\mu)}$ is a value of the sequence of the demodulation reference signals mapped on a first RE (k, l), and the first RE (k, l) has a subcarrier index of k, and a symbol index of l; $\beta_{DMRS}$ is an amplitude scale factor; $w_f(k')$ is a frequency domain weighting, and $w_t(l')$ is a time domain weighting; $r(cn + k')$ is the sequence of the DMRS; $\Delta$ is the CDM group subcarrier offset; 1 is an index of a start symbol of the demodulation reference signals, k' is a first weighting index of the demodulation reference signals, and l' is a second weighting index of the demodulation reference signals; c=4, and d=12, $\mu$ is a subcarrier spacing; and a corresponding relationship between k'' and k' includes:

| k' | k'' |
|----|-----|
| 0  | 0   |
| 1  | 1   |
| 2  | 6   |
| 3  | 7   |

wherein, when k' = 0 or 1, k'' = k', and when k' = 2 or 3, k'' = k' + 4.

In a third aspect, a communication apparatus is provided and includes: a processing unit, a receiving unit and a sending unit, wherein

the processing unit is configured to generate a sequence of demodulation reference signals; and
the sending unit is configured to map the sequence of the demodulation reference signals to time-frequency resources of the demodulation reference signals for transmission, the time-frequency resources including time-frequency resources corresponding to a first CDM group, the first CDM group corresponding to at most eight antenna ports, each of the at most eight antenna ports corresponding to at most four frequency domain weightings and at most two time domain weightings, wherein port weightings of a first antenna port and a second antenna port in the at most eight antenna ports are orthogonal.

In a fourth aspect, a communication apparatus is provided and includes: a processing unit, a receiving unit and a sending unit, wherein

the receiving unit is configured to receive demodulation reference signals sent by a sending device on time-frequency resources of the demodulation reference signals, the time-frequency resources including time-frequency resources corresponding to a first CDM group, the first CDM group corresponding to at most eight antenna ports, each of the at most eight antenna ports corresponding to at most four frequency domain weightings and at most two time domain weightings, and port weightings of a first antenna port and a second antenna port in the at most eight antenna ports being orthogonal; and
the processing unit is configured to obtain a sequence of the demodulation reference signals.

In a fifth aspect, a communication apparatus is provided and includes: a processor, a memory and a transceiver. The transceiver receives and sends data under control of the processor; the memory stores computer instructions; and the processor is configured to read the computer instructions and execute the method according to any one of the first aspect or the second aspect above.

In a sixth aspect, a non-volatile computer readable storage medium is provided. The computer readable storage medium stores computer executable instructions, and the computer executable instructions are used for causing a computer to execute the method according to any one of the first aspect or the second aspect above.

In a seventh aspect, a computer program product is provided, and the computer program product, when called by a computer, causes the computer to execute the method according to any one of the first aspect or the second aspect above.

In the above embodiments of the present disclosure, since the first CDM group includes at most eight antenna ports, each antenna port corresponds to at most four frequency domain weightings and at most two time domain weightings, furthermore, the port weightings of the first antenna port and the second antenna port among the at most eight antenna ports are orthogonal, and in this way, the first CDM group may support at most eight antenna ports. Compared to a current CDM group supporting at most four antenna ports, by means of the present disclosure, the number of the antenna ports may be increased, thereby increasing the maximum number of transmission layers and improving a system transmission capacity.

Embodiments of the present disclosure further provide a reference signal transmission method, an apparatus, and a storage medium, to ensure that a terminal can perform transmission of demodulation reference signals.

In an eighth aspect, a reference signal transmission method is provided and includes:

acquiring, by a terminal, first time-frequency resources of demodulation reference signals, wherein the first time-frequency resources include a fourth CDM group, a time-frequency resource corresponding to the fourth CDM group includes a first subcarrier group, a part of subcarriers in the first subcarrier group is located in a first PRB, and the other part of subcarriers is located in a second PRB;
determining, by the terminal, second time-frequency resources used for transmission of the demodulation reference signals or a first demodulation reference signal type, the second time-frequency resources being the same as the first time-frequency resources or being subsets of the first time-frequency resources; and
sending or receiving, by the terminal, the demodulation reference signals on the second time-frequency resources.

Alternatively, determining, by the terminal, the second time-frequency resources used for transmission of the demodulation reference signals includes: determining, by the terminal, that the first time-frequency resources include an even number of PRBs; and determining, by the terminal, the first time-frequency resources as the second time-frequency resources used for transmission of the demodulation reference signals.

Alternatively, determining, by the terminal, the second time-frequency resources used for transmission of the demodulation reference signals includes: determining, by the terminal, time-frequency resources in the odd number of PRBs apart from the first PRB, as the second time-frequency resources used for transmission of the demodulation reference signals based on that the first time-frequency resources include an odd number of PRBs.

Alternatively, determining, by the terminal, the second time-frequency resources used for transmission of the demodulation reference signals includes: determining, by the terminal,, time-frequency resources in the odd number of PRBs apart from a part of REs on the first PRB as the second time-frequency resources used for transmission of the demodulation reference signals based on that the first time-frequency resources include an odd number of PRBs.

Alternatively, the part of REs is REs with subcarrier indexes of 0 to 3 in the first PRB, or REs with subcarrier indexes of 8 to 11 in the first PRB, or REs with subcarrier indexes of 4 to 7 in the first PRB.

Alternatively, the first PRB is a first PRB, or a last PRB, or an intermediate PRB of the odd number of PRBs.

Alternatively, determining, by the terminal, the second time-frequency resources used for transmission of the demodulation reference signals and/or transmission of data includes: determining, by the terminal, that the first demodulation reference signal type is a Type 1 DMRS or a Type 2 DMRS based on that the first time frequency resources include an odd number of PRBs.

In a ninth aspect, a reference signal transmission method is provided and includes:

determining, by a network device, first time-frequency resources of demodulation reference signals for a terminal, wherein the first time-frequency resources include a fourth CDM group, a time-frequency resource corresponding to the fourth CDM group includes a first subcarrier group, a part of subcarriers in the first subcarrier group is located in a first PRB, and the other part of subcarriers is located in a second PRB; and
indicating, by the network device, the first time-frequency resources of the demodulation reference signals to the terminal.

Alternatively, the first time-frequency resources include an even number of PRBs.

In a tenth aspect, a communication apparatus is provided and includes: a processing unit, a receiving unit and a sending unit, wherein

the processing unit is configured to acquire first time-frequency resources of demodulation reference signals, wherein the first time-frequency resources include a fourth CDM group, a time-frequency resource corresponding to the fourth CDM group includes a first subcarrier group, a part of subcarriers in the first subcarrier group is located in a first PRB, and the other part of subcarriers is located in a second PRB; and determine second time-frequency resources used for transmission of the demodulation reference signals or a first demodulation reference signal type, the second time-frequency resources being the same as the first time-frequency resources or being subsets of the first time-frequency resources; and
the sending unit is configured to send the demodulation reference signals on the second time-frequency resources; or the receiving unit is configured to receive the demodulation reference signals on the second time-frequency resources.

In an eleventh aspect, a communication apparatus is provided and includes: a processing unit, a receiving unit and a sending unit, wherein

the processing unit is configured to determine first time-frequency resources of demodulation reference signals for a terminal, wherein the first time-frequency resources include a fourth CDM group, a time-frequency resource corresponding to the fourth CDM group includes a first subcarrier group, a part of subcarriers in the first subcarrier group is located in a first PRB, and the other part of subcarriers is located in a second PRB; and
the sending unit is configured to indicate the first time-frequency resources of the demodulation reference signals to the terminal.

In a twelfth aspect, a communication apparatus is provided and includes: a processor, a memory and a transceiver, wherein

the transceiver receives and sends data under control of the processor; the memory stores computer instructions; and the processor is configured to read the computer instructions and execute the method according to any one of the eighth aspect or the ninth aspect above.

In a thirteenth aspect, a non-volatile computer readable storage medium is provided. The computer readable storage medium stores computer executable instructions, and the computer executable instructions are used for causing a computer to execute the method according to any one of the eighth aspect or the ninth aspect above.

In a fourteenth aspect, a computer program product is provided, and the computer program product, when called by a computer, causes the computer to execute the method according to any one of the eighth aspect or the ninth aspect above.

In the above embodiments of the present disclosure, for a case that in the first time-frequency resources of the demodulation reference signals configured by the network side for the terminal, the time-frequency resource corresponding to one CDM group includes the first subcarrier group, the part of subcarriers in the first subcarrier group is located in the first PRB, and the other part of subcarriers is located in the second PRB, the terminal may determine the second time-frequency resources used for transmission of the demodulation reference signals (the second time-frequency resources are the same as the first time-frequency resources or are subsets of the first time-frequency resources), to ensure that the terminal can perform transmission of the demodulation reference signals.

## BRIEF DESCRIPTION OF DRAWINGS

In order to illustrate technical solutions of the embodiments of the present disclosure more clearly, accompanying drawings needing to be used in the embodiments of the present disclosure will be introduced below briefly. Apparently, the accompanying drawings introduced below are only some embodiments of the present disclosure, those ordinarily skilled in the art can further obtain other accompanying drawings according to these accompanying drawings without creative work.

FIG. 1 is a schematic diagram of a network architecture to which an embodiment of the present disclosure is applicable;

FIG. 2 is a schematic diagram of a Rel-15 Type 1 DMRS transmission pattern;

FIG. 3 is a schematic diagram of a Rel-15 Type 2 DMRS transmission pattern;

FIG. 4 is a schematic flow diagram of a reference signal transmission method according to some embodiments of the present disclosure;

FIG. 5 is a schematic diagram of a Type 4 DMRS transmission pattern according to some embodiments of the present disclosure;

FIG. 6 is a schematic diagram of a Type 3 DMRS transmission pattern according to some embodiments of the present disclosure;

FIG. 7 is a schematic diagram of a DMRS transmission pattern according to some embodiments of the present disclosure;

FIG. 8a is a schematic flow diagram of a communication method implemented on a terminal side according to some embodiments of the present disclosure;

FIG. 8b is a schematic flow diagram of a communication method implemented on a network side according to some embodiments of the present disclosure;

FIG. 9 is a schematic structural diagram of a communication apparatus according to some embodiments of the present disclosure;

FIG. 10 is a schematic structural diagram of a communication apparatus according to some embodiments of the present disclosure;

## DETAILED DESCRIPTION OF THE INVENTION

In order to make objectives, technical solutions and advantages of the present disclosure more clear, the present disclosure will be further described in detail below with reference to accompanying drawings. Apparently, the described embodiments are only part of the embodiments of the present disclosure, but not all the embodiments. On the basis of the embodiments in the present disclosure, all other embodiments obtained by those ordinarily skilled in the art without creative work fall within the protection scope of the present disclosure.

Part of terms in the embodiments of the present disclosure are explained and illustrated below to facilitate understanding of those skilled in the art.

(1) In the embodiments of the present disclosure, terms "network" and "system" are often used interchangeably, but the meaning thereof can be understood by those skilled in the art.

(2) A term "a plurality of" in the embodiments of the present disclosure refers to two or more than two, and other quantifiers are similar thereto.

(3) "And/or" describes an association relationship of associated objects, and represents that there may be three kinds of relationships, for example, A and/or B, may represent three cases that: A exists alone, A and B exist at the same time, and B exists alone. A character "/" generally represents that the associated objects in front of and behind the character are in an "or" relationship.

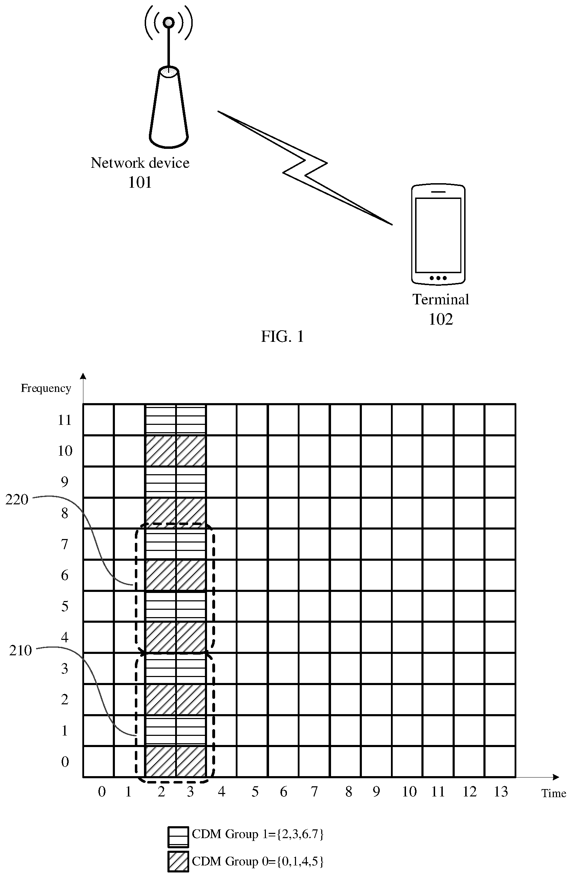

FIG. 1 exemplarily shows a network system architecture to which an embodiment of the present disclosure is applicable. A communication system shown in FIG. 1 includes a network device 101 and a terminal 102, the network device 101 may send downlink data and a DMRS to the terminal 102, and the terminal 102 may perform downlink channel estimation according to the received DMRS. The terminal 102 may further send the DMRS and uplink data to the network device 101, and the network device performs uplink channel estimation according to the received DMRS.

The DMRS sent by the network device 101 to the terminal 102 is also referred to as a downlink DMRS or a PDSCH DMRS, and thus the terminal 102 may perform channel estimation on the PDSCH according to the DMRS. The DMRS sent by the terminal 102 to the network device 101 is also referred to as an uplink DMRS or a PUSCH DMRS, and thus the network device 101 may perform channel estimation on the PUSCH according to the DMRS.

The network device 101 is a device that provides a wireless communication function for the terminal, and is configured to receive an uplink signal from the terminal 102 or send a downlink signal to the terminal 102. The network device 101 includes, but is not limited to: a gNB in 5G, a radio network controller (RNC), a node B (NB), a base station controller (BSC), a base transceiver station (BTS), a Femtocell (for example, a home evolved nodeB, or a home node B (HNB)), a baseband unit (BBU), a transmitting and receiving point (TRP), a transmitting point (TP), a mobile switching center, etc. The base station in the present disclosure may further be a device for providing a wireless communication function to a terminal in other communication systems which may appear in the future.

The terminal 102 is an entity on a user side for receiving or transmitting the signal, and is configured to send the uplink signal to the network device or receive the downlink signal from the network device. The terminal may also be referred to as user equipment (UE). The terminal 102 may be a device that provides voice and/or data connectivity to a user. For example, the terminal may include a handheld device and a vehicle-mounted device with a wireless connection function. At present, the terminal may be: a mobile phone, a tablet computer, a notebook computer, a palm computer, a mobile Internet device (MID), a wearable device, a virtual reality (VR) device, an augmented reality (AR) device, a wireless terminal in industrial control, a wireless terminal in self-driving, a wireless terminal in a smart grid, a wireless terminal in transportation safety, a wireless terminal in a smart city, a wireless terminal in a smart home and the like.

FIG. 1 is only an example, and does not limit a type of the communication system, and the number, types and the like of devices included in the communication system. A network architecture and a service scenario described by the embodiments of the present disclosure are for the purpose of illustrating the technical solutions of the embodiments of the present disclosure, and do not constitute limitation to the technical solutions provided by the embodiments of the present disclosure. Those ordinarily skilled in the art should know that with evolution of the network architecture and emergence of the new service scenario, the technical solutions provided by the embodiments of the present disclosure is also applicable to the similar technical problem.

Based on the communication system shown in FIG. 1, each cell independently configures a set of DMRS generation parameters for the terminal. On a time domain, the DMRS occupies a plurality of symbols within one slot, and a maximum length may be configured as two symbols. On a frequency domain, the DMRS occupies a plurality of subcarriers of a plurality of resource blocks (RBs). Different antenna ports may use the same time-frequency resource and perform multiplexing by means of code division, therefore different CDM groups are divided. One CDM group corresponds to the plurality of antenna ports (also referred to as DMRS ports), each antenna port corresponds to one layer, and different DMRS orthogonal signals are mapped to each layer. The antenna ports in the same CDM group are extended on the time-frequency domain by using an orthogonal cover code (OCC), and orthogonality of different antenna ports can be ensured, which may improve accuracy of channel estimation. Different CDM groups are orthogonal on the frequency domain, namely, occupy different subcarriers.

According to a current NR protocol, Type 1 DMRS may support a maximum of eight antenna ports, and Type 2 DMRS may support a maximum of twelve antenna ports.

Taking downlink DMRS (PDSCH DMRS) as an example, the following is an introduction of the transmission methods of Type 1 DMRS and Type 2 DMRS in the Rel-15 system. It should be noted that the transmission method of uplink DMRS is similar.

Type 1 DMRS transmission method:

The terminal multiplies the DMRS sequence r(m) by an amplitude scale factor $\beta_{PDSCH}^{DMRS}$, to meet transmission power requirements, and maps the DMRS sequence to RE(k, l)$_{p,\mu}$ (the RE is an abbreviation of a resource element) in the following modes:

$$\alpha_{k,l}^{(p,\mu)} = \beta_{PDSCH}^{DMRS} w_{\text{f}}(k') w_{\text{t}}(l') r(2n + k')$$
$$k = 4n + 2k' + \Delta$$
$$k' = 0,1 \qquad \ldots\ldots\ldots\ldots\ldots\ldots(1)$$
$$l = \bar{l} + l'$$
$$n = 0,1, \ldots$$

Wherein, $\alpha_{k,l}^{(p,\mu)}$ represents a value of the DMRS sequence mapped on RE(k, l), k is a frequency domain subcarrier index, 1 is a time domain symbol index, p is an antenna port index, and $\mu$ is a subcarrier spacing parameter; $w_{\text{f}}$(k') and $w_{\text{t}}$(l') are antenna port weightings, wherein $w_{\text{f}}$(k') is a frequency domain weighting, $w_{\text{t}}$(l') is a time domain weighting, and $w_{\text{f}}$(k') and $w_{\text{t}}$(l') are used for calculating an OCC corresponding to the RE k, l); r(2n + k') is a sequence of a DMRS; $\Delta$ is a subcarrier offset of a CDM group; 1 is an index of a starting symbol of the DMRS; and l' is a symbol offset of the DMRS, and is jointly determined by a high-layer parameter dmrs-AdditionalPosition, a PDSCH mapping type, the number of symbols of the DMRS, etc.

$w_f(k')$, $w_t(l')$ and $\Delta$ are given by Table 1.

Table 1: PDSCH DMRS type 1 (Type 1 DMRS) parameters

| *p* | CDM group $\lambda$ | $\Delta$ | $w_f(k')$ | | $w_t(l')$ | |
|---|---|---|---|---|---|---|
| | | | *k' = 0* | *k' = 1* | *l' = 0* | *l' = 1* |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

In Table 1, $\lambda$ represents the CDM group index, and Type 1 DMRS includes two CDM groups: CDM group 0 and CDM group 1.

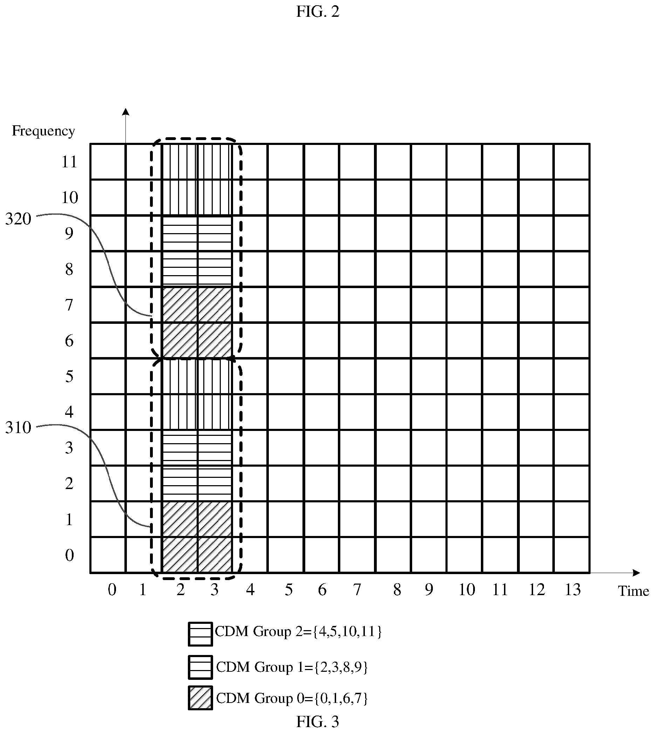

A transmission pattern of the Type 1 DMRS may be as shown in FIG. 2. FIG. 2 shows a time-frequency resource position of Type 1 DMRS in one PRB. The REs shown in different fill patterns belong to the different CDM groups. The CDM group 0 corresponds to an antenna port {0,1,4,5}, the CDM group 1 corresponds to an antenna port {2,3,6,7}, wherein the numbers represent the index of the antenna ports.

It should be noted that for the downlink DMRS (PDSCH DMRS), the index of the antenna port is 1000+0/1/4/5 or 1000+2/3/6/7; and for the uplink DMRS (PUSCH DMRS), the index of the antenna port is 0+0/1/4/5 or 0+2/3/6/7. In the description of other parts of the present disclosure, when uplink and downlink are not distinguished, 0-23 are used to represent the antenna port, and on this basis, 1000 is added to represent an actual antenna port of the downlink DMRS (PDSCH DMRS) and 0 is added to represent an actual antenna port of the uplink DMRS (PUSCH DMRS).

For the Type 1 DMRS, when two symbols are configured for DMRS transmission, it can ensure the orthogonality of four antenna ports in the CDM group by the frequency domain weighting and the time domain weighting in the same CDM group. The Type 1 DMRS contains two CDM groups (the CDM group 0 and the CDM group 1), and a transmission pattern is repeated every four subcarriers on the frequency domain. As shown in FIG. 2, transmission patterns (antenna port weightings) of the eight REs within a dashed box 210 are the same as transmission patterns (antenna port weightings) of the eight REs within a dashed box 220. That is to say, for each CDM group, OCC is performed on four REs in the CDM group, which may make the two CDM groups only support at most eight orthogonal antenna ports.

Type 2 DMRS transmission method:

the terminal multiplies the DMRS sequence r(m) by the amplitude scale factor $\beta_{PDSCH}^{DMRS}$, to meet transmission power requirements, and maps the DMRS sequence to RE(k, l)$_{p,\mu}$ in the following modes:

$$\alpha_{k,l}^{(p,\mu)} = \beta_{PDSCH}^{DMRS} w_f(k') w_t(l') r(2n + k')$$
$$k = 6n + k' + \Delta$$
$$k' = 0,1$$
$$l = \bar{l} + l'$$
$$n = 0,1, \ldots$$

$\ldots\ldots\ldots\ldots\ldots\ldots\ldots\ldots(2)$

The meaning of the parameters in formula (2) is the same as the corresponding parameters in formula (1).

$w_f(k')$, $w_t(l')$ and $\Delta$ are given by Table 2.

Table 2: PDSCH DMRS type 2 (Type 2 DMRS) parameters

| $p$ | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

In Table 2, $\lambda$ represents the CDM group index, and Type 2 DMRS includes three CDM groups: CDM group 0, CDM group 1 and CDM group 2.

A transmission pattern of the Type 2 DMRS may be as shown in FIG. 3. FIG. 3 shows a time-frequency resource position of Type 2 DMRS in one PRB. The REs shown in different fill patterns belong to the different CDM groups. The CDM group 0 corresponds to an antenna port {0,1,6,7}, the CDM group 1 corresponds to an antenna port {2,3,8,9}, the CDM group 2 corresponds to an antenna port {4,5,10,11}, wherein the numbers represent the index of the antenna ports.

For the Type 2 DMRS, when two symbols are configured for DMRS transmission, it may ensure the orthogonality of four antenna ports in the CDM group by the frequency domain weighting and the time domain weighting in the same CDM group. The Type 2 DMRS contains three CDM groups (the CDM group 0, the CDM group 1 and the CDM group 2), and a transmission pattern is repeated every six subcarriers on the frequency domain. As shown in FIG. 3, transmission patterns (antenna port weightings) of the twelve REs within a dashed box 310 are the same as transmission patterns (antenna port weightings) of the twelve REs within a dashed box 320. That is to say, for each CDM group, OCC is performed on four REs in the CDM group, which may make the three CDM groups only support at most twelve orthogonal antenna ports.

With the increase of the application of the NR 5G and the sudden increase of the number of terminals, it is urgent to increase the maximum number of ports supported by the DMRS to increase the system capacity. According to the description of the Rel-18 multiple input multiple output (MIMO) project, it is expected to increase the maximum number of ports supported by the DMRS to 24 without increasing DMRS overheads.

After the maximum number of ports supported by the DMRS is increased to 24, furthermore, the problem of simultaneous scheduling of an Rel-18 UE and an Rel-15 UE needs to be considered. A DMRS transmission pattern of the Rel-15 UE is different from a transmission pattern of the Rel-18 UE, and it needs to ensure the orthogonality of DMRS resources of the Rel-15 UE and the Rel-18 UE when a base station (gNB) simultaneously schedules the Rel-15 UE and the Rel-18 UE to perform multi-user MIMO (MU-MIMO).

It may be understood that two sequences or vectors being orthogonal means that an inner product of the two sequences or vectors is equal to 0. The inner product operation is also called hadamard product.

Based on the described existing problems and requirements, embodiments of the present disclosure provide a reference signal transmission method and an apparatus, to increase the number of orthogonal antenna ports that can be supported by a system without additionally increasing demodulation reference signal overheads, thereby increasing the number of users or the number of layers that may be simultaneously scheduled, and further ensuring that UEs of different versions may be simultaneously scheduled and interference is at a low level. The method and the apparatus are based on the same inventive concept. Since principles of the method and the apparatus for solving the problem are similar, the implementations of the apparatus and the method may refer to each other, and the repetitions are omitted.

The embodiments of the present disclosure are applicable to both a downlink DMRS and an uplink DMRS.

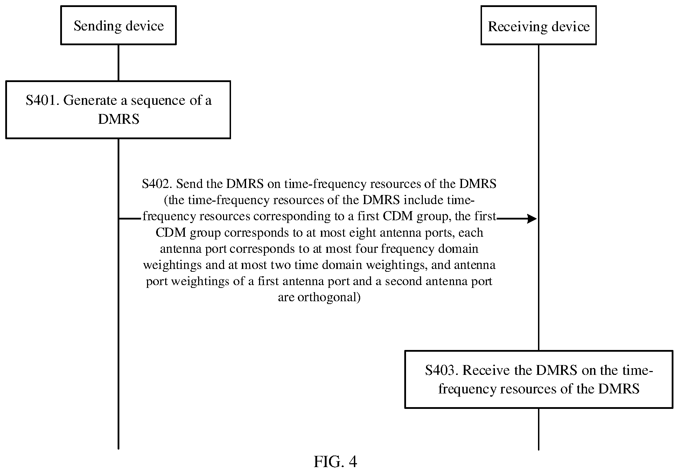

FIG. 4 exemplarily shows a schematic diagram of a reference signal transmission flow provided by an embodiment of the present disclosure. The method may be applied to a network architecture shown in FIG. 1, and certainly may also be applied to other network architectures, which is not limited in the present disclosure. When the method is applied to the network architecture shown in FIG. 1, with regard to downlink DMRS transmission, a sending device involved in the method may be a network device 101 (e.g., a base station) in FIG. 1, and a receiving device involved in the method may be a terminal 102 in FIG. 1; and with regard to uplink DMRS transmission, the sending device involved in the method may be the terminal 102 in FIG. 1, and the receiving device involved in the method may be the network device 101 (e.g., the base station) in FIG. 1.

Referring to FIG. 4, the method may include the following processing flows.

S401: the sending device generates a sequence of demodulation reference signals (DMRS);

S402: the sending device maps a sequence of the DMRS to time-frequency resources of the DMRS for transmission; and

S403: the receiving device receives the DMRS sent by the sending device on the time-frequency resources of the DMRS.

Further, the receiving device performs channel estimation on the corresponding channel according to the received DMRS. For example, the terminal performs channel estimation on a PDSCH according to the DMRS sent by the network device (e.g., the base station); for another example, the network device (e.g., the base station) performs channel estimation on the PUSCH according to the DMRS sent by the terminal.

In the embodiment of the present disclosure, the time-frequency resources of the DMRS include time-frequency resources corresponding to a first CDM group, the first CDM group corresponds to at most eight antenna ports, and each of the at most eight antenna ports corresponds to at most four frequency domain weightings ($w_f(k')$) and at most two time domain weightings ($w_t(l')$). Antenna port weightings of a first antenna port and a second antenna port among the at most eight antenna ports are orthogonal.

Alternatively, the time-frequency resources of the DMRS may include time-frequency resources corresponding to one CDM group, and may also include time-frequency resources corresponding to two or more CDM groups. If the time-frequency resources of the DMRS include the time-frequency resources corresponding to the two or more CDM groups, each CDM group corresponds to at most eight antenna ports, wherein each antenna port corresponds to at most four frequency domain weightings ($w_f(k')$) and at most two time domain weightings ($w_t(l')$).

Alternatively, the network device may allocate a part of antenna ports among the at most eight antenna ports corresponding to one CDM group to the terminal, and antenna port weightings of antenna ports allocated by the network device to the terminal are orthogonal. For example, the network device indicates a DMRS port used by the terminal in the current transmission through an antenna port indication field (antenna port(s) field) in downlink control information (DCI).

In the embodiment of the present disclosure, since an OCC corresponding to one RE is obtained by performing an inner product operation with a frequency domain weighting and a time domain weighting, according to the above at most four frequency domain weightings ($w_f(k')$) and at most two time domain weightings ($w_t(l')$), OCC may be performed on at most eight REs (two symbols in a time domain and four subcarriers in a frequency domain) corresponding to the first CDM group to enable the first CDM group to support at most eight antenna ports. Compared with a current CDM group supporting at most four antenna ports, by means of the embodiment of the present disclosure, it may increase the number of antenna ports supported by each CDM group, and thus increase the maximum number of transmission layers, thereby improving a system transmission capacity.

In some embodiments of the present disclosure, there is a corresponding relationship between an antenna port index corresponding to the DMRS, a CDM group subcarrier offset and antenna port weightings, wherein the antenna port weightings include at most four frequency domain weightings ($w_f(k')$) and at most two time domain weightings ($w_t(l')$). The corresponding relationship is used for resource mapping of the DMRS.

Alternatively, in the embodiment of the present disclosure, a parameter information table of the DMRS is extended, and thus the parameter information table includes the above corresponding relationship. The parameter information table of the DMRS may include the corresponding relationship among a CDM group index, the antenna port index, the CDM group subcarrier offset and the antenna port weightings. The DMRS parameter information table is used for DMRS resource mapping, and when the DMRS resource mapping is performed, it can query the parameter information table according to the allocated CDM group index and the antenna port index, to obtain the corresponding antenna port weightings (including the frequency domain weightings and the time domain weightings), thereby mapping a DMRS sequence to the corresponding RE according to the antenna port weightings.

A traditional DMRS parameter information table (e.g., an Rel-15 DMRS parameter information table) includes at most two frequency domain weightings and at most two time domain weightings. In the embodiment of the present disclosure, by extending the DMRS parameter information table, the DMRS parameter information table includes the at most four frequency domain weightings and the at most two time domain weightings, to ensure that each CDM group corresponds to at most eight antenna ports.

In the embodiment of the present disclosure, in order to enable different antenna ports corresponding to one CDM group to be orthogonal to each other, the at most four frequency domain weightings and the at most two time domain weightings corresponding to each antenna port may be as shown in Table 1a or Table 1b. It should be noted that Table 1a and Table 1b only exemplarily show the four frequency domain weightings and the at most two time domain weightings corresponding to each of the eight antenna ports corresponding to one CDM group, and other design solutions of the frequency domain weightings and the time domain weightings that can achieve the same objective should also fall within the scope of protection of the present disclosure.

Table 1a: antenna port weightings corresponding to eight antenna ports

| Antenna port | $w_f(k')$ | | | | $w_t(l')$ | |
|---|---|---|---|---|---|---|
| | $k' = k_0$ | $k' = k_1$ | $k' = k_2$ | $k' = k_3$ | $l' = l'_0$ | $l' = l'_1$ |
| First antenna port | +1 | +1 | +1 | +1 | +1 | +1 |
| Second antenna port | +1 | -1 | +1 | -1 | +1 | +1 |
| Third antenna port | +1 | +1 | +1 | +1 | +1 | -1 |
| Fourth antenna port | +1 | -1 | +1 | -1 | +1 | -1 |
| Fifth antenna port | +1 | -1 | -1 | +1 | +1 | +1 |
| Sixth antenna port | +1 | +1 | -1 | -1 | +1 | +1 |
| Seventh antenna port | +1 | -1 | -1 | +1 | +1 | -1 |
| Eighth antenna port | +1 | +1 | -1 | -1 | +1 | -1 |

Table 1b: antenna port weightings corresponding to eight antenna ports

| Antenna port | $w_f(k')$ | | | | $w_t(l')$ | |
|---|---|---|---|---|---|---|
| | $k' = k_0$ | $k' = k_1$ | $k' = k_2$ | $k' = k_3$ | $l' = l'_0$ | $l' = l'_1$ |
| First antenna port | +1 | +1 | +1 | +1 | +1 | +1 |
| Second antenna port | +1 | -1 | +1 | -1 | +1 | +1 |
| Third antenna port | +1 | +1 | +1 | +1 | +1 | -1 |
| Fourth antenna port | +1 | -1 | +1 | -1 | +1 | -1 |
| Fifth antenna port | -1 | -1 | +1 | +1 | +1 | +1 |
| Sixth antenna port | -1 | +1 | +1 | -1 | +1 | +1 |
| Seventh antenna port | -1 | -1 | +1 | +1 | +1 | -1 |
| Eighth antenna port | -1 | +1 | +1 | -1 | +1 | -1 |

In tables 1a and 1b, $w_f(k')$ is the frequency domain weighting, and $w_t(l')$ is the time domain weighting; k' is a first weighting index of the DMRS, and may be used for determining a subcarrier position of the DMRS (for example, being used for determining a subcarrier index); and l' is a second weight index of the DMRS, and may be used for determining a symbol position of the DMRS (for example, being used for determining an index of the symbol). $\{k_0, k_1, k_2, k_3\}$ and $\{l'_0, l'_1\}$ are system preset values.

In some embodiments, $l'_0 = 0$, the frequency domain weightings of the specific antenna ports among the first antenna port to the eighth antenna port are orthogonal. It may be understood that the DMRS may occupy only one symbol, or may occupy two symbols. If a network side only configures the DMRS to occupy only one symbol corresponding to $l'_0$ (for example, the network side does not configure a parameter maxlength or the parameter maxlength is configured as 'len1'), under the single-symbol DMRS transmission, it may be predefined in a protocol that the terminal uses only part of the antenna ports, for example, 1000-1011 or 1000-1007 or 0-11 or 0-7, and indexes 1 of the symbols of these ports are determined by $l' = l'_0$, or the network side may further configure $l' = l'_0$ to the terminal through a radio resource control (RRC) message or other dynamic signaling.

In some other embodiments, $l'_1 = 1$, the frequency domain weightings of the specific antenna ports among the first antenna port to the eighth antenna port are orthogonal. It may be understood that the DMRS may occupy only one symbol, or may occupy two symbols. If the network side only configures the DMRS to occupy only a symbol corresponding to $l'_1$ (for example, the network side does not configure a parameter maxlength or the parameter maxlength is configured as 'len1'), under the single-symbol DMRS transmission, it may be predefined in a protocol that the terminal uses only part of the antenna ports, for example, 1012-1023 or 1008-1015 or 12-23 or 8-15, and indexes 1 of the symbols of these ports are determined by l' = l'$_1$, or the network side may further configure l' = l'$_1$ to the terminal through the RRC message or other dynamic signaling.

In some other embodiments, l'$_0$ = 0, l'$_1$ = 1, inner products of the frequency domain weightings and time domain weightings of the specific antenna ports among the first antenna port to the eighth antenna port are orthogonal. It may be understood that the DMRS may occupy only one symbol, or may occupy two symbols. If the DMRS occupies two symbols (for example, the network side configures the parameter maxlength as 'len2'), it may be predefined in the protocol that l' = l'$_0$, l'$_1$, or the network side may further configure l' = l'$_0$, l'$_1$ to the terminal through the RRC message.

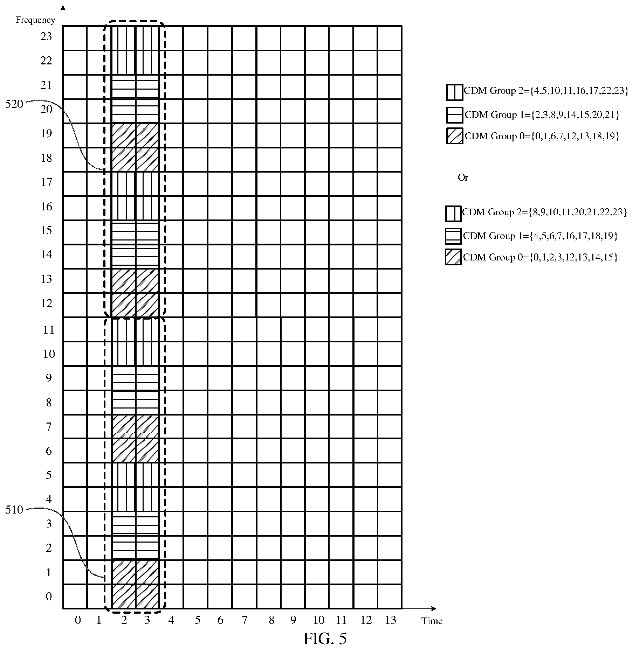

Alternatively, {k$_0$, k$_1$, k$_2$, k$_3$}={0,1,6,7}, that is, k$_0$ = 0, k$_1$ = 1, k$_2$ = 6, k$_3$ = 7. Exemplarily, for a Type 2 DMRS, when a DMRS transmission pattern shown in FIG. 5 is used, for the CDM group 0, k' = k$_0$ = 0, it may be determined that a corresponding subcarrier index in one PRB is 0 according to k', and then a DMRS is mapped onto a subcarrier 0 of the PRB according to a DMRS resource mapping formula, and so on. Similarly, k' = k$_2$ = 6, when the corresponding subcarrier index in one PRB is 6, the DMRS is mapped to a subcarrier 6 of the PRB according to the DMRS resource mapping formula.

Alternatively, {k$_0$, k$_1$, k$_2$, k$_3$}={0,1,2,3}. That is: k$_0$ = 0, k$_1$ = 1, k$_2$ = 2, k$_3$ = 3. Exemplarily, for the Type 2 DMRS, when the DMRS transmission pattern shown in FIG. 5 is used, for the CDM group 0, k' = k$_0$ = 0, it may be determined according to k' that the corresponding subcarrier index in one PRB is 0, and then the DMRS is mapped to the subcarrier 0 of the PRB according to the DMRS resource mapping formula, and so on. Similarly, k' = k$_2$ = 2, when the corresponding subcarrier index in one PRB is 6, the DMRS is mapped to the subcarrier 6 of the PRB according to the DMRS resource mapping formula.

It should be noted that a corresponding relationship between the above {k$_0$, k$_1$, k$_2$, k$_3$} and a specific value is merely an example, which is not limited by the embodiment of the present disclosure. For example, the corresponding relationship between {k$_0$, k$_1$, k$_2$, k$_3$} and the specific value may further be: k$_0$ = 6, k$_1$ = 7, k$_2$ = 0, k$_3$ = 1, or the like.

Exemplarily, for the Type 2 DMRS, when the DMRS transmission pattern as shown in FIG. 5 is used, if a higher-level parameter dmrs-TypeA-Position indicates that a DMRS start symbol is 2, l'$_0$ = 0, then l' = 0, which indicates that the DMRS is mapped to a symbol 2; and l'$_1$ = 1, then 1' = 1, which indicates that the DMRS is mapped to a symbol 3.

Some embodiments of the present disclosure perform antenna port enhancement based on the Type 2 DMRS, resulting in a new DMRS types referred to as a Type 4 DMRS or an Rel-18 Type 2 DMRS. Some other embodiments of the present disclosure perform antenna port enhancement based on a Type 1 DMRS, resulting in a new DMRS type referred to as a Type 3 DMRS or an Rel-18 Type 1 DMRS. A transmission method of the Type 4 DMRS provided by the embodiment of the present disclosure is described below with reference to Embodiment 1, and a transmission method of the Type 3 DMRS provided by the embodiment of the present disclosure is described below with reference to Embodiment 2.

Embodiment 1: a 24-port DMRS design based on Type 2 DMRS enhancement

In some embodiments of the present disclosure, for a Type 4 DMRS, one port extension mode is a design that preserves three CDM groups, and extends the number of antenna ports of each CDM group to at most 8.

Taking each CDM group corresponding to eight antenna ports as an example, a transmission scheme of the Type 4 DMRS in the embodiment of the present disclosure is illustrated below taking a scheme 1 and a scheme 2 as examples.

Scheme 1:

(1) a corresponding relationship between the CDM group and the antenna ports:
the corresponding relationship between the CDM group and the antenna ports may be one of the following first corresponding relationship and second corresponding relationship.

First corresponding relationship:

an index of antenna ports corresponding to a CDM group 0 includes: p$_b$+{0,1,6,7,12,13,18,19};
an index of antenna ports corresponding to a CDM group 1 includes: p$_b$+{2,3,8,9,14,15,20,21}; and
an index of the antenna ports corresponding to a CDM group 2 includes: p$_b$+{4,5,10,11,16,17,22,23}.

When the demodulation reference signals are uplink demodulation reference signals, p$_b$ = 0, and when the demodulation reference signals are downlink demodulation reference signals, p$_b$ = 1000.

By using such a corresponding relationship between the CDM group and the antenna ports, the CDM group corresponding to antenna ports 0-11 is the same as DMRS design as the Rel-15, that is, the corresponding relationship between the antenna ports 0-11 in the Rel-15 and the CDM groups is used. Second corresponding relationship:

an index of antenna ports corresponding to a CDM group 0 includes: p$_b$+{0,1,2,3,12,13,14,15};
an index of antenna ports corresponding to a CDM group 1 includes: p$_b$+{4,5,6,7,16,17,18,19}; and

an index of the antenna ports corresponding to a CDM group 2 includes: $p_b$+{8,9,10,11,20,21,22,23}.

When the demodulation reference signals are uplink demodulation reference signals, $p_b$ = 0, and when the demodulation reference signals are downlink demodulation reference signals, $p_b$ = 1000.

By using the corresponding relationship between the CDM group and the antenna ports, the index of the antenna ports in one CDM group on one symbol is continuous.

In the first corresponding relationship and the second corresponding relationship, when the high-level parameter maxLength is configured as 'len2', it represents that a length of a DMRS transmission symbol is 2, and a corresponding relationship between each transmission symbol and the port may be predefined as:

the port on a first transmission symbol of the DMRS is $p_b$+{0-11}, the port on a second transmission symbol is $p_b$+{12-23}, and the corresponding relationship between the DMRS transmission symbols and the ports may also be determined through configuration or indication of the network side.

When the high-level parameter maxLength is not configured or the high-level parameter is configured as 'len1', it represents that the length of the DMRS transmission symbol is 1, and the corresponding relationship between the transmission symbol and the port is the same as that when maxLength is configured as 'len2', then DCI may instruct the terminal to perform transmission on the first transmission symbol, or perform transmission on the second transmission symbol, and ports indicated to the terminal in the DCI may only all correspond to the ports on the first symbol, or all correspond to the ports on the second symbol.

(2) DMRS sequence mapping scheme:

in order to map the antenna ports to the time-frequency resources corresponding to the CDM group, for example, to map the antenna ports of the CDM group 0 to an RE corresponding to the CDM group 0 in FIG. 5, the DMRS mapping formula is enhanced in the embodiment of the present disclosure. In Rel-15 Type 2 DMRS, both the DMRS sequence r(2n + k') and the subcarrier index k = 6n + k' + $\Delta$ relate to parameters k', and the parameters k' are related to the frequency domain weightings $w_f$(k') in one CDM group. Therefore, the embodiment of the present disclosure jointly design a plurality of parameters related to k'.

Exemplarily, in a DMRS mapping method provided by an embodiment of the present disclosure, a value of k' is discontinuous. Taking the CDM group 0 as an example, frequencydomain resources corresponding to the CDM group 0 include subcarriers 0, 1, 6, 7 in one PRB. The DMRS mapping formula is:

$$\alpha_{k,l}^{(p,\mu)} = \beta_{PDSCH}^{DMRS} w_\text{f}(k') w_\text{t}(l') r(cn + k')$$
$$k = dn + k' + \Delta$$
$$k' = 0,1,6,7 \quad \dots\dots\dots\dots\dots\dots(3)$$
$$l = \bar{l} + l'$$
$$n = 0,1,\dots$$

In a formula (3), $\beta_{DMRS}$ is an amplitude scale factor; $w_f$(k') is a frequency domain weighting, and $w_t$(l') is a time domain weighting; k' is a first weighting index of the DMRS, and may be used for determining a subcarrier position of the DMRS; l' is a second weighting index of the DMRS, and may be used for determining a symbol position of the DMRS; r(cn + k') is a sequence of the DMRS; $\Delta$ is a subcarrier offset of the CDM group; $\bar{l}$ is an index of the start symbol of the DMRS; and $\mu$ is a subcarrier spacing.

A value of a parameter c: the value of the parameter c for Rel-15 UE is 2, and the value of the parameter c for Rel-18 UE may be 4. In this case, the generated DMRS sequence is relatively long, but only a part of the generated DMRS sequence is used for transmission of the DMRS. The value may further be 2. Compared with the value of 4, the generated DMRS sequence may be slightly shorter, and the DMRS sequence values used by different RBs (or PRBs) may be repeated.

A value of the parameter d: the value of the parameter for the Rel-15 UE is 6, and the value of the parameter for the Rel-18 UE may be 12, which indicate that for the Rel-18 UE, the transmission pattern is repeated once every twelve REs.

(3) OCC design:

For the Rel-15 UE, in one RB (or PRB), the time-frequency resources corresponding to each CDM group appear twice repeatedly. For example, as shown in FIG. 3, four REs corresponding to a subcarrier {0,1} and a symbol {0,1} constitute the CDM group 0; and four REs corresponding to a subcarrier {6,7} and the symbol {0,1} also constitute the CDM group 0. It is equivalent that the frequency domain weighting of each CDM group is repeated in the frequency domain with a period of six REs. As shown in FIG. 3, $w_f$(k') and $w_t$(l') used by RE(0,2) corresponding to the CDM group 0 and RE(6,2) are the same, $w_f$(k') and $w_t$(l') used by RE(0,3) and RE(6,3) are the same, $w_f$(k') and $w_t$(l') used by RE(1,2) and RE(7,2) are the same, and $w_f$(k') and $w_t$(l') used by RE(1,3) and RE(7,3) are the same.

In the embodiment of the present disclosure, for the Rel-18 UE, one CDM group contains eight antenna ports. Still taking the CDM group 0 as an example, it is necessary to perform OCC on eight REs in the CDM group 0 within one RB (or PRB) in FIG. 3, to ensure that at most eight antenna ports are supported, as shown in FIG. 5.

If $w_f(k')$ and $w_t(l')$ in Table 2 are still used, only four groups of weightings as in Table 3 can be supported. It should be noted that '1' and '+1' are equivalent in all embodiments of the present disclosure.

Table 3: wf(k'), $w_t(l')$ product of Rel-15 Type 2 DMRS CDM group 0 in half RB

|  | Port 1000 | Port 1001 | Port 1006 | Port 1007 |
|---|---|---|---|---|
| $k'$ = 0, $l'$ = 0 | 1 | 1 | 1 | 1 |
| $k'$ = 1, $l'$ = 0 | 1 | -1 | 1 | -1 |
| $k'$ = 0, $l'$ = 1 | 1 | 1 | -1 | -1 |
| $k'$ = 1, $l'$ = 1 | 1 | -1 | -1 | 1 |

In the embodiment of the present disclosure, when considering joint scheduling of the Rel-15 UE and the Rel-18 UE, still taking the CDM group 0 as an example, it may be considered that a weighting of the Rel-15 UE in the whole RB (or PRB) is as shown in Table 4:

Table 4: $w_f(k')$, $w_t(l')$ product of Rel-15 Type 2 DMRS CDM group 0 in RB

|  | Port 1000 | Port 1001 | Port 1006 | Port 1007 |
|---|---|---|---|---|
| **$k'$ = 0**, $l'$ = 0 | 1 | 1 | 1 | 1 |
| **$k'$ = 1**, $l'$ = 0 | 1 | -1 | 1 | -1 |
| **$k'$ = 2**, $l'$ = 0 | 1 | 1 | 1 | 1 |
| **$k'$ = 3**, $l'$ = 0 | 1 | -1 | 1 | -1 |
| **$k'$ = 0**, $l'$ = 1 | 1 | 1 | -1 | -1 |
| **$k'$ = 1**, $l'$ = 1 | 1 | -1 | -1 | 1 |
| **$k'$ = 2**, $l'$ = 1 | 1 | 1 | -1 | -1 |
| **$k'$ = 3**, $l'$ = 1 | 1 | -1 | -1 | 1 |

When 24-port DMRS design is performed (that is, each CDM group corresponds to eight antenna ports), weighting products (inner products) of the OCC and the antenna ports of the Rel-15 above may be orthogonal, and weighting products (inner products) of an antenna port of the OCC and the antenna ports of the Rel-15 are also orthogonal. Therefore, the following OCC design method may be used:

The weighting products (inner products) shown in Table 5a or Table 5b may be used to ensure that at most eight groups of orthogonal OCCs are supported, and that the OCC of the Rel-15 UE and the OCC of the Rel-18 are also orthogonal:

Table 5a: $w_f(k')$, $w_t(l')$ product of one CDM group of Rel-18 Type 2 DMRS:

|  | Orthogonal basis 1 | Orthogonal basis 2 | Orthogonal basis 3 | Orthogonal basis 4 |
|---|---|---|---|---|
| $w_f(k')$, $w_t(l')$ Weighting product | +1 | +1 | +1 | +1 |
|  | -1 | -1 | +1 | +1 |
|  | -1 | -1 | -1 | -1 |
|  | +1 | +1 | -1 | -1 |
|  | -1 | +1 | -1 | +1 |
|  | +1 | -1 | -1 | +1 |
|  | +1 | -1 | +1 | -1 |
|  | -1 | +1 | +1 | -1 |

Table 5b: $w_f(k')$, $w_t(l')$ product of one CDM group of Rel-18 Type 2 DMRS:

| | Orthogonal basis 1 | Orthogonal basis 2 | Orthogonal basis 3 | Orthogonal basis 4 |
|---|---|---|---|---|
| | -1 | -1 | -1 | -1 |
| | -1 | -1 | +1 | +1 |
| | +1 | +1 | +1 | +1 |
| $w_f(k')$, $w_t(l')$ Weighting product | +1 | +1 | -1 | -1 |
| | -1 | +1 | -1 | +1 |
| | -1 | +1 | +1 | -1 |
| | +1 | -1 | +1 | -1 |
| | +1 | -1 | -1 | +1 |

The OCC of each port of Rel-18 is constituted jointly based on the above orthogonal basis (as shown in Table 5a or Table 5b) and the weightings in Table 4. It is divided into a form of $w_f(k')$, w, (1'), the weightings of eight antenna ports in one CDM group may be shown in Table 6a or Table 6b:

Table 6a: $w_f(k')$, $w_t(l')$ of one CDM group of Rel-18 Type 2 DMRS

| Antenna port | $w_f(k')$ | | | | $w_t(l')$ | |
|---|---|---|---|---|---|---|
| | $k' = 0$ | $k' = 1$ | $k' = 6$ | $k' = 7$ | $l' = 0$ | $l' = 1$ |
| First antenna port | +1 | +1 | +1 | +1 | +1 | +1 |
| Second antenna port | +1 | -1 | +1 | -1 | +1 | +1 |
| Third antenna port | +1 | +1 | +1 | +1 | +1 | -1 |
| Fourth antenna port | +1 | -1 | +1 | -1 | +1 | -1 |
| Fifth antenna port | +1 | -1 | -1 | +1 | +1 | +1 |
| Sixth antenna port | +1 | +1 | -1 | -1 | +1 | +1 |
| Seventh antenna port | +1 | -1 | -1 | +1 | +1 | -1 |
| Eighth antenna port | +1 | +1 | -1 | -1 | +1 | -1 |

Table 6b: $w_f(k')$, $w_t(l')$ of one CDM group of Rel-18 Type 2 DMRS

| Antenna port | $w_f(k')$ | | | | $w_t(l')$ | |
|---|---|---|---|---|---|---|
| | $k' = 0$ | $k' = 1$ | $k' = 6$ | $k' = 7$ | $l' = 0$ | $l' = 1$ |
| First antenna port | +1 | +1 | +1 | +1 | +1 | +1 |
| Second antenna port | +1 | -1 | +1 | -1 | +1 | +1 |
| Third antenna port | +1 | +1 | +1 | +1 | +1 | -1 |
| Fourth antenna port | +1 | -1 | +1 | -1 | +1 | -1 |
| Fifth antenna port | -1 | -1 | +1 | +1 | +1 | +1 |
| Sixth antenna port | -1 | +1 | +1 | -1 | +1 | +1 |
| Seventh antenna port | -1 | -1 | +1 | +1 | +1 | -1 |
| Eighth antenna port | -1 | +1 | +1 | -1 | +1 | -1 |

It should be noted that the antenna port weightings in Table 6a and Table 6b are applicable to all CDM groups. In all embodiments of the present disclosure, columns of the frequency domain weightings may be exchanged in order, and columns of the time domain weightings may also be exchanged in order.

In combination with the corresponding relationship between the CDM groups and the antenna ports, the values of the CDM group of each antenna port, $\Delta$, and $w_f(k')$, $w_t(l')$ may be as shown in Table 7a or Table 7b or Table 7c or Table 7d:

Table 7a: Rel-18 Type 2 DMRS parameter information

| p | CDM group λ | Δ | $w_f(k')$ | | | | $w_t(l')$ | |
|---|---|---|---|---|---|---|---|---|
| | | | k' = 0 | k' = 1 | k' = 6 | k' = 7 | l' = 0 | l' = 1 |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 2 | +1 | +1 | +1 | +1 | +1 | +1 |
| 1003 | 1 | 2 | +1 | -1 | +1 | -1 | +1 | +1 |
| 1004 | 2 | 4 | +1 | +1 | +1 | +1 | +1 | +1 |
| 1005 | 2 | 4 | +1 | -1 | +1 | -1 | +1 | +1 |
| 1006 | 0 | 0 | +1 | +1 | +1 | +1 | +1 | -1 |
| 1007 | 0 | 0 | +1 | -1 | +1 | -1 | +1 | -1 |
| 1008 | 1 | 2 | +1 | +1 | +1 | +1 | +1 | -1 |
| 1009 | 1 | 2 | +1 | -1 | +1 | -1 | +1 | -1 |
| 1010 | 2 | 4 | +1 | +1 | +1 | +1 | +1 | -1 |
| 1011 | 2 | 4 | +1 | -1 | +1 | -1 | +1 | -1 |
| 1012 | 0 | 0 | +1 | -1 | -1 | +1 | +1 | +1 |
| 1013 | 0 | 0 | +1 | +1 | -1 | -1 | +1 | +1 |
| 1014 | 1 | 2 | +1 | -1 | -1 | +1 | +1 | +1 |
| 1015 | 1 | 2 | +1 | +1 | -1 | -1 | +1 | +1 |
| 1016 | 2 | 4 | +1 | -1 | -1 | +1 | +1 | +1 |
| 1017 | 2 | 4 | +1 | +1 | -1 | -1 | +1 | +1 |
| 1018 | 0 | 0 | +1 | -1 | -1 | +1 | +1 | -1 |
| 1019 | 0 | 0 | +1 | +1 | -1 | -1 | +1 | -1 |
| 1020 | 1 | 2 | +1 | -1 | -1 | +1 | +1 | -1 |
| 1021 | 1 | 2 | +1 | +1 | -1 | -1 | +1 | -1 |
| 1022 | 2 | 4 | +1 | -1 | -1 | +1 | +1 | -1 |
| 1023 | 2 | 4 | +1 | +1 | -1 | -1 | +1 | -1 |

Table 7b: Rel-18 Type 2 DMRS parameter information

| p | CDM group λ | Δ | $w_f(k')$ | | | | $w_t(l')$ | |
|---|---|---|---|---|---|---|---|---|
| | | | k' = 0 | k' = 1 | k' = 6 | k' = 7 | l' = 0 | l' = 1 |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 2 | +1 | +1 | +1 | +1 | +1 | +1 |
| 1003 | 1 | 2 | +1 | -1 | +1 | -1 | +1 | +1 |
| 1004 | 2 | 4 | +1 | +1 | +1 | +1 | +1 | +1 |
| 1005 | 2 | 4 | +1 | -1 | +1 | -1 | +1 | +1 |
| 1006 | 0 | 0 | +1 | +1 | +1 | +1 | +1 | -1 |
| 1007 | 0 | 0 | +1 | -1 | +1 | -1 | +1 | -1 |
| 1008 | 1 | 2 | +1 | +1 | +1 | +1 | +1 | -1 |
| 1009 | 1 | 2 | +1 | -1 | +1 | -1 | +1 | -1 |

(continued)

| p | CDM group λ | Δ | $w_f(k')$ | | | | $w_t(l')$ | |
|---|---|---|---|---|---|---|---|---|
| | | | k' = 0 | k' = 1 | k' = 6 | k' = 7 | l' = 0 | l' = 1 |
| 1010 | 2 | 4 | +1 | +1 | +1 | +1 | +1 | -1 |
| 1011 | 2 | 4 | +1 | -1 | +1 | -1 | +1 | -1 |
| 1012 | 0 | 0 | -1 | -1 | +1 | +1 | +1 | +1 |
| 1013 | 0 | 0 | -1 | +1 | +1 | -1 | +1 | +1 |
| 1014 | 1 | 2 | -1 | -1 | +1 | +1 | +1 | +1 |
| 1015 | 1 | 2 | -1 | +1 | +1 | -1 | +1 | +1 |
| 1016 | 2 | 4 | -1 | -1 | +1 | +1 | +1 | +1 |
| 1017 | 2 | 4 | -1 | +1 | +1 | -1 | +1 | +1 |
| 1018 | 0 | 0 | -1 | -1 | +1 | +1 | +1 | -1 |
| 1019 | 0 | 0 | -1 | +1 | +1 | -1 | +1 | -1 |
| 1020 | 1 | 2 | -1 | -1 | +1 | +1 | +1 | -1 |
| 1021 | 1 | 2 | -1 | +1 | +1 | -1 | +1 | -1 |
| 1022 | 2 | 4 | -1 | -1 | +1 | +1 | +1 | -1 |
| 1023 | 2 | 4 | -1 | +1 | +1 | -1 | +1 | -1 |

Table 7c: Rel-18 Type 2 DMRS parameter information

| p | CDM group λ | Δ | $w_f(k')$ | | | | $w_t(l')$ | |
|---|---|---|---|---|---|---|---|---|
| | | | k' = 0 | k' = 1 | k' = 6 | k' = 7 | l' = 0 | l' = 1 |
| 1000 | 0 | 0 | +1 | +1 | +1 | +1 | +1 | +1 |
| 1001 | 0 | 0 | +1 | -1 | +1 | -1 | +1 | +1 |
| 1002 | 0 | 0 | +1 | +1 | +1 | +1 | +1 | -1 |
| 1003 | 0 | 0 | +1 | -1 | +1 | -1 | +1 | -1 |
| 1004 | 1 | 2 | +1 | +1 | +1 | +1 | +1 | +1 |
| 1005 | 1 | 2 | +1 | -1 | +1 | -1 | +1 | +1 |
| 1006 | 1 | 2 | +1 | +1 | +1 | +1 | +1 | -1 |
| 1007 | 1 | 2 | +1 | -1 | +1 | -1 | +1 | -1 |
| 1008 | 2 | 4 | +1 | +1 | +1 | +1 | +1 | +1 |
| 1009 | 2 | 4 | +1 | -1 | +1 | -1 | +1 | +1 |
| 1010 | 2 | 4 | +1 | +1 | +1 | +1 | +1 | -1 |
| 1011 | 2 | 4 | +1 | -1 | +1 | -1 | +1 | -1 |
| 1012 | 0 | 0 | +1 | -1 | -1 | +1 | +1 | +1 |
| 1013 | 0 | 0 | +1 | +1 | -1 | -1 | +1 | +1 |
| 1014 | 0 | 0 | +1 | -1 | -1 | +1 | +1 | -1 |
| 1015 | 0 | 0 | +1 | +1 | -1 | -1 | +1 | -1 |
| 1016 | 1 | 2 | +1 | -1 | -1 | +1 | +1 | +1 |
| 1017 | 1 | 2 | +1 | +1 | -1 | -1 | +1 | +1 |
| 1018 | 1 | 2 | +1 | -1 | -1 | +1 | +1 | -1 |
| 1019 | 1 | 2 | +1 | +1 | -1 | -1 | +1 | -1 |

(continued)

| p | CDM group λ | Δ | $w_f(k')$ | | | | $w_t(l')$ | |
|---|---|---|---|---|---|---|---|---|
| | | | k' = 0 | k' = 1 | k' = 6 | k' = 7 | l' = 0 | l' = 1 |
| 1020 | 2 | 4 | +1 | -1 | -1 | +1 | +1 | +1 |
| 1021 | 2 | 4 | +1 | +1 | -1 | -1 | +1 | +1 |
| 1022 | 2 | 4 | +1 | -1 | -1 | +1 | +1 | -1 |
| 1023 | 2 | 4 | +1 | +1 | -1 | -1 | +1 | -1 |

Table 7d: Rel-18 Type 2 DMRS parameter information

| p | CDM group λ | Δ | $w_f(k')$ | | | | $w_t(l')$ | |
|---|---|---|---|---|---|---|---|---|
| | | | k' = 0 | k' = 1 | k' = 6 | k' = 7 | l' = 0 | l' = 1 |
| 1000 | 0 | 0 | +1 | +1 | +1 | +1 | +1 | +1 |
| 1001 | 0 | 0 | +1 | -1 | +1 | -1 | +1 | +1 |
| 1002 | 0 | 0 | +1 | +1 | +1 | +1 | +1 | -1 |
| 1003 | 0 | 0 | +1 | -1 | +1 | -1 | +1 | -1 |
| 1004 | 1 | 2 | +1 | +1 | +1 | +1 | +1 | +1 |
| 1005 | 1 | 2 | +1 | -1 | +1 | -1 | +1 | +1 |
| 1006 | 1 | 2 | +1 | +1 | +1 | +1 | +1 | -1 |
| 1007 | 1 | 2 | +1 | -1 | +1 | -1 | +1 | -1 |
| 1008 | 2 | 4 | +1 | +1 | +1 | +1 | +1 | +1 |
| 1009 | 2 | 4 | +1 | -1 | +1 | -1 | +1 | +1 |
| 1010 | 2 | 4 | +1 | +1 | +1 | +1 | +1 | -1 |
| 1011 | 2 | 4 | +1 | -1 | +1 | -1 | +1 | -1 |
| 1012 | 0 | 0 | -1 | -1 | +1 | +1 | +1 | +1 |
| 1013 | 0 | 0 | -1 | +1 | +1 | -1 | +1 | +1 |
| 1014 | 0 | 0 | -1 | -1 | +1 | +1 | +1 | -1 |
| 1015 | 0 | 0 | -1 | +1 | +1 | -1 | +1 | -1 |
| 1016 | 1 | 2 | -1 | -1 | +1 | +1 | +1 | +1 |
| 1017 | 1 | 2 | -1 | +1 | +1 | -1 | +1 | +1 |
| 1018 | 1 | 2 | -1 | -1 | +1 | +1 | +1 | -1 |
| 1019 | 1 | 2 | -1 | +1 | +1 | -1 | +1 | -1 |
| 1020 | 2 | 4 | -1 | -1 | +1 | +1 | +1 | +1 |
| 1021 | 2 | 4 | -1 | +1 | +1 | -1 | +1 | +1 |
| 1022 | 2 | 4 | -1 | -1 | +1 | +1 | +1 | -1 |
| 1023 | 2 | 4 | -1 | +1 | +1 | -1 | +1 | -1 |

In Table 7a or Table 7b or Table 7c or Table 7d, the weightings of the plurality of ports in one CDM group may be replaced with each other, that is, the embodiment of the present disclosure does not limit the corresponding relationship between the antenna ports and the weightings within one CDM group.

Based on the above Table 7a or Table 7b or Table 7c or Table 7d and the DMRS mapping formula (3), a process of mapping the DMRS sequence to the time-frequency resources of the DMRS by a sending device may include: obtaining, by the sending device, a subcarrier offset (Δ), a frequency domain weighting ($w_f(k')$) and a time domain weighting ($w_t(l')$) of a CDM group corresponding to a first RE (k, l) according to parameter information table (such as the Table 7a or the Table 7b or the Table 7c or the Table 7d) of the DMRS, wherein the first RE (k, l) has the subcarrier index of k in the DMRS time-frequency resource and has the symbol index of l; and then obtaining data $\alpha_{k,l}^{(p,\mu)}$ of the DMRS sequence mapped to the first RE (k, l) according to the subcarrier offset, the frequency domain weighting and the time domain weighting of the CDM group, $\alpha_{k,l}^{(p,\mu)}$ meeting the above formula (3).

FIG. 5 shows a schematic diagram of an Rel-18 Type 2 DMRS (or referred to as Type 4 DMRS) transmission pattern provided by an embodiment of the present disclosure. As shown in the figure, the Rel-18 Type 2 DMRS contains three CDM groups (the CDM group 0, the CDM group 1 and the CDM group 2), and a transmission pattern is repeated every twelve subcarriers on the frequency domain. As shown in FIG. 5, transmission patterns (antenna port weightings) of the twelve REs within a dashed box 510 are the same as transmission patterns (antenna port weightings) of the twelve REs within a dashed box 520. That is to say, OCC is performed on eight REs in one CDM group, in this way, the three CDM groups can only support at most twenty-four orthogonal antenna ports.

It should be noted that by using the above scheme 1, the Rel-15 UE and the Rel-18 UE cannot use the same antenna port when performing MU-MIMO transmission. For example, the Rel-15 UE uses the antenna port 1002, and the Rel-18 UE also uses the antenna port 1002, which results in that DMRS sequences of the Rel-15 UE and the Rel-18 UE cannot be orthogonal.

Scheme 2:

(1) the corresponding relationship between the CDM group and the antenna ports:
the corresponding relationship between the CDM group and the antenna ports may be one of the above first corresponding relationship and second corresponding relationship.
(2) DMRS sequence mapping scheme:
based on the same principle as the first transmission scheme 1 of the Type 4 DMRS above, the embodiment of the present disclosure enhances the DMRS mapping formula and jointly designs a plurality of parameters related to k'.

Exemplarily, in a DMRS mapping method provided by an embodiment of the present disclosure, k' = 0,1,2,3, the value is continuous, and therefore it need to introduce other offset parameters, such as k" (k" is used for representing an offset between different frequency domain subcarriers within the CDM group), to ensure that a pattern of the DMRS is the same as that of FIG. 3, which means that it is ensured that the DMRS sequence is mapped to a corresponding RE as shown in FIG. 3. The DMRS mapping formula is:

$$
\begin{aligned}
\alpha_{k,l}^{(p,\mu)} &= \beta_{PDSCH}^{DMRS} w_{\mathrm{f}}(k') w_{\mathrm{t}}(l') r(cn + k') \\
k &= dn + k'' + \Delta \\
k' &= 0,1,2,3 \\
l &= \bar{l} + l' \\
n &= 0,1, \ldots
\end{aligned} \qquad \ldots\ldots\ldots\ldots\ldots\ldots\ldots(4)
$$

The meaning of the parameters in formula (4) is the same as the corresponding parameters in formula (3).

A value of a parameter c: c=4, and the value may ensure that the generated DMRS sequences are all used for DMRS transmission.

A value of a parameter d: d=12, and the value represents that for the Rel-18 UE, the transmission pattern is repeated once every twelve REs.

wherein, a relationship between k" and k' may be as shown in Table 8:

Table 8: relationship between *k"* and *k'*

| *k'* | *k"* |
|---|---|
| *k'* = 0 | 0 |
| *k'* = 1 | 1 |
| *k'* = 2 | 6 |
| *k'* = 3 | 7 |

The relationship between k" and k' may also be represented as:

$$k'' = \begin{cases} k', \text{when } k' = 0,1 \\ k' + 4, \text{when } k' = 2,3 \end{cases}$$

Or represented as:

$$k = \begin{cases} \text{dn} + k' + \Delta, \text{when } k' = 0,1 \\ \text{dn} + k' + 4 + \Delta, \text{when } k' = 2,3 \end{cases}$$

(3) OCC design:

a case where the value of k' is 0,1,2,3 is similar to a case where the value of k' is 0,1,6,7.

When k' = 0,1,2,3, the weightings of the eight antenna ports in one CDM group may be shown in Table 9a or Table 9b.

Table 9a: $w_f(k')$, $w_t(l')$ of one CDM group of Rel-18 Type 2 DMRS

| Antenna port | $w_f(k')$ | | | | $w_t(l')$ | |
| --- | --- | --- | --- | --- | --- | --- |
| | $k' = 0$ | $k' = 1$ | $k' = 2$ | $k' = 3$ | $l' = 0$ | $l' = 1$ |
| First antenna port | +1 | +1 | +1 | +1 | +1 | +1 |
| Second antenna port | +1 | -1 | +1 | -1 | +1 | +1 |
| Third antenna port | +1 | +1 | +1 | +1 | +1 | -1 |
| Fourth antenna port | +1 | -1 | +1 | -1 | +1 | -1 |
| Fifth antenna port | +1 | -1 | -1 | +1 | +1 | +1 |
| Sixth antenna port | +1 | +1 | -1 | -1 | +1 | +1 |
| Seventh antenna port | +1 | -1 | -1 | +1 | +1 | -1 |
| Eighth antenna port | +1 | +1 | -1 | -1 | +1 | -1 |

Table 9b: $w_f(k')$, $w_t(l')$ of one CDM group of Rel-18 Type 2 DMRS

| Antenna port | $w_f(k')$ | | | | $w_t(l')$ | |
| --- | --- | --- | --- | --- | --- | --- |
| | $k' = 0$ | $k' = 1$ | $k' = 2$ | $k' = 3$ | $l' = 0$ | $l' = 1$ |
| First antenna port | +1 | +1 | +1 | +1 | +1 | +1 |
| Second antenna port | +1 | -1 | +1 | -1 | +1 | +1 |
| Third antenna port | +1 | +1 | +1 | +1 | +1 | -1 |
| Fourth antenna port | +1 | -1 | +1 | -1 | +1 | -1 |
| Fifth antenna port | -1 | -1 | +1 | +1 | +1 | +1 |
| Sixth antenna port | -1 | +1 | +1 | -1 | +1 | +1 |
| Seventh antenna port | -1 | -1 | +1 | +1 | +1 | -1 |
| \| Eighth antenna port | -1 \| | +1 \| | +1 \| | -1 | \| +1 | \| -1 |

In combination with the corresponding relationship between the CDM groups and the antenna ports, the values of the CDM group of each antenna port, $\Delta$, and $w_f(k')$, $w_t(l')$ may be as shown in Table 10a or Table 10b:

Table 10a: Rel-18 Type 2 DMRS parameter information

| $p$ | CDM group $\lambda$ | $\Delta$ | $w_f(k')$ | | | | $w_t(l')$ | |
| --- | --- | --- | --- | --- | --- | --- | --- | --- |
| | | | $k' = 0$ | $k' = 1$ | $k' = 2$ | $k' = 3$ | $l' = 0$ | $l' = 1$ |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 2 | +1 | +1 | +1 | +1 | +1 | +1 |

(continued)

| p | CDM group λ | Δ | $w_f(k')$ | | | | $w_t(l')$ | |
|---|---|---|---|---|---|---|---|---|
| | | | $k' = 0$ | $k' = 1$ | $k' = 2$ | $k' = 3$ | $l' = 0$ | $l' = 1$ |
| 1003 | 1 | 2 | +1 | -1 | +1 | -1 | +1 | +1 |
| 1004 | 2 | 4 | +1 | +1 | +1 | +1 | +1 | +1 |
| 1005 | 2 | 4 | +1 | -1 | +1 | -1 | +1 | +1 |
| 1006 | 0 | 0 | +1 | +1 | +1 | +1 | +1 | -1 |
| 1007 | 0 | 0 | +1 | -1 | +1 | -1 | +1 | -1 |
| 1008 | 1 | 2 | +1 | +1 | +1 | +1 | +1 | -1 |
| 1009 | 1 | 2 | +1 | -1 | +1 | -1 | +1 | -1 |
| 1010 | 2 | 4 | +1 | +1 | +1 | +1 | +1 | -1 |
| 1011 | 2 | 4 | +1 | -1 | +1 | -1 | +1 | -1 |
| 1012 | 0 | 0 | +1 | -1 | -1 | +1 | +1 | +1 |
| 1013 | 0 | 0 | +1 | +1 | -1 | -1 | +1 | +1 |
| 1014 | 1 | 2 | +1 | -1 | -1 | +1 | +1 | +1 |
| 1015 | 1 | 2 | +1 | +1 | -1 | -1 | +1 | +1 |
| 1016 | 2 | 4 | +1 | -1 | -1 | +1 | +1 | +1 |
| 1017 | 2 | 4 | +1 | +1 | -1 | -1 | +1 | +1 |
| 1018 | 0 | 0 | +1 | -1 | -1 | +1 | +1 | -1 |
| 1019 | 0 | 0 | +1 | +1 | -1 | -1 | +1 | -1 |
| 1020 | 1 | 2 | +1 | -1 | -1 | +1 | +1 | -1 |
| 1021 | 1 | 2 | +1 | +1 | -1 | -1 | +1 | -1 |
| 1022 | 2 | 4 | +1 | -1 | -1 | +1 | +1 | -1 |
| 1023 | 2 | 4 | +1 | +1 | -1 | -1 | +1 | -1 |

Table 10b: Rel-18 Type 2 DMRS parameter information

| p | CDM group λ | Δ | $w_f(k')$ | | | | $w_t(l')$ | |
|---|---|---|---|---|---|---|---|---|
| | | | $k' = 0$ | $k' = 1$ | $k' = 2$ | $k' = 3$ | $l' = 0$ | $l' = 1$ |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 2 | +1 | +1 | +1 | +1 | +1 | +1 |
| 1003 | 1 | 2 | +1 | -1 | +1 | -1 | +1 | +1 |
| 1004 | 2 | 4 | +1 | +1 | +1 | +1 | +1 | +1 |
| 1005 | 2 | 4 | +1 | -1 | +1 | -1 | +1 | +1 |
| 1006 | 0 | 0 | +1 | +1 | +1 | +1 | +1 | -1 |
| 1007 | 0 | 0 | +1 | -1 | +1 | -1 | +1 | -1 |
| 1008 | 1 | 2 | +1 | +1 | +1 | +1 | +1 | -1 |
| 1009 | 1 | 2 | +1 | -1 | +1 | -1 | +1 | -1 |
| 1010 | 2 | 4 | +1 | +1 | +1 | +1 | +1 | -1 |
| 1011 | 2 | 4 | +1 | -1 | +1 | -1 | +1 | -1 |
| 1012 | 0 | 0 | -1 | -1 | +1 | +1 | +1 | +1 |

(continued)

| p | CDM group $\lambda$ | $\Delta$ | $w_f(k')$ | | | | $w_t(l')$ | |
|---|---|---|---|---|---|---|---|---|
| | | | $k' = 0$ | $k' = 1$ | $k' = 2$ | $k' = 3$ | $l' = 0$ | $l' = 1$ |
| 1013 | 0 | 0 | -1 | +1 | +1 | -1 | +1 | +1 |
| 1014 | 1 | 2 | -1 | -1 | +1 | +1 | +1 | +1 |
| 1015 | 1 | 2 | -1 | +1 | +1 | -1 | +1 | +1 |
| 1016 | 2 | 4 | -1 | -1 | +1 | +1 | +1 | +1 |
| 1017 | 2 | 4 | -1 | +1 | +1 | -1 | +1 | +1 |
| 1018 | 0 | 0 | -1 | -1 | +1 | +1 | +1 | -1 |
| 1019 | 0 | 0 | -1 | +1 | +1 | -1 | +1 | -1 |
| 1020 | 1 | 2 | -1 | -1 | +1 | +1 | +1 | -1 |
| 1021 | 1 | 2 | -1 | +1 | +1 | -1 | +1 | -1 |
| 1022 | 2 | 4 | -1 | -1 | +1 | +1 | +1 | -1 |
| 1023 | 2 | 4 | -1 | +1 | +1 | -1 | +1 | -1 |

By the above OCC design method, i.e., the value design of $w_f(k')$ and $w_t(l')$ above, it may enable at most eight antenna ports in the same CDM group being orthogonal, and in the case where DMRS sequences are the same, the antenna ports in the same CDM group of the Rel-18 UE and the Rel-15 UE are also orthogonal.

It should be noted that by using the above scheme 2, the Rel-15 UE and the Rel-18 UE cannot use the same antenna port when performing MU-MIMO transmission, which may result in that DMRS resources of the Rel-15 UE and the Rel-18 UE cannot be orthogonal.

Embodiment 2: a 16-port DMRS design based on Type 1 DMRS enhancement

In some embodiments of the present disclosure, for a Type 3 DMRS, one port extension mode is a design that preserves two CDM groups, and extends the antenna ports of each CDM group to at most 8. In this way, the total number of antenna ports of two CDM groups may reach at most 16.

Taking each CDM group corresponding to eight antenna ports as an example, a transmission scheme of the Type 3 DMRS in the embodiment of the present disclosure is illustrated below taking a scheme 3 and a scheme 4 as examples.

Scheme 3:

(1) a corresponding relationship between the CDM group and the antenna ports:

an index of antenna ports corresponding to a CDM group 0 includes: $p_b$+{0,1,4,5,8,9,12,13}; and
an index of the antenna ports corresponding to a CDM group 1 includes: $p_b$+{2,3,6,7,10,11,14,15}.

When the demodulation reference signals are uplink demodulation reference signals, $p_b = 0$, and when the demodulation reference signals are downlink demodulation reference signals, $p_b = 1000$.

By using such the corresponding relationship between the CDM group and the antenna ports, the CDM group corresponding to antenna ports 0-7 has the same DMRS design as the Rel-15, i.e., the corresponding relationship between the antenna ports 0-7 in the Rel-15 and the CDM groups is used.

When the high-level parameter maxLength is configured as 'len2', it represents that a length of a DMRS transmission symbol is 2, and a corresponding relationship between each transmission symbol and the port may be predefined as:

the port on a first transmission symbol of the DMRS is $p_b$+{0-7}, the port on a second transmission symbol is $p_b$+{8-15}, and the corresponding relationship between the DMRS transmission symbols and the ports may also be determined through configuration or indication of a network side.

When the high-level parameter maxLength is not configured or the high-level parameter is configured as 'len1', it represents that the length of the DMRS transmission symbol is 1, and the corresponding relationship between the transmission symbol and the port is the same as that when maxLength is configured as 'len2', then DCI may instruct the terminal to perform transmission on the first transmission symbol, or perform transmission on the second transmission symbol, and ports indicated to the terminal in the DCI may only all correspond to the ports on the first symbol, or all correspond to the ports on the second symbol.

(2) DMRS sequence mapping scheme:

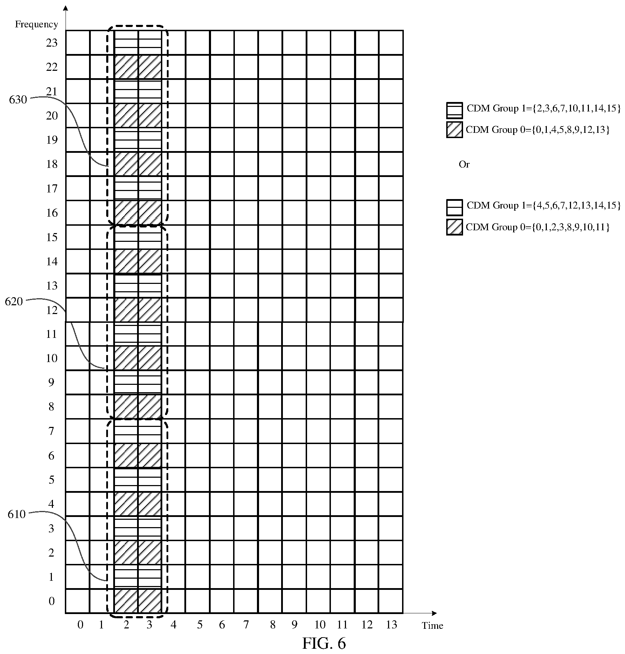

in order to map the antenna ports to the time-frequency resources corresponding to the CDM group, for example, to map the antenna ports of the CDM group 0 to an RE corresponding to the CDM group 0 in FIG. 6, the DMRS mapping formula is enhanced in the embodiment of the present disclosure. In Rel-15 Type 1 DMRS, both the sequence r(2n + k') and the subcarrier index k = 4n + 2k' + Δ relate to parameters k', and the parameters k' are related to weightings $w_f(k')$ in one CDM group. Therefore, the embodiment of the present disclosure jointly design a plurality of parameters related to k'.

Exemplarily, in a DMRS mapping method provided by an embodiment of the present disclosure, a DMRS mapping formula is:

$$\alpha_{k,l}^{(p,\mu)} = \beta_{PDSCH}^{DMRS} w_f(k') w_t(l') r(cn + k')$$
$$k = dn + 2k' + \Delta$$
$$k' = 0,1,2,3 \quad\quad \ldots\ldots\ldots\ldots\ldots\ldots(5)$$
$$l = \bar{l} + l'$$
$$n = 0,1,\ldots$$

The meaning of the parameters in formula (5) is the same as the corresponding parameters in formula (3).

A value of a parameter c: c=4, and the value may ensure that the generated DMRS sequences are all used for DMRS transmission.

A value of a parameter d: d=8, and the value represents that for the Rel-18 UE, the transmission pattern is repeated once every eight REs.

(3) OCC design:

In this embodiment, OCC of eight antenna ports may be performed by using weightings shown in Table 6a or Table 6b. In combination with the corresponding relationship between the CDM groups and the antenna ports, the values of the CDM group of each port, Δ and $w_f(k')$, $w_t(l')$ may be as shown in Table 11a or Table 11b:

Table 11a: Rel-18 Type 1 DMRS parameter information

| p | CDM group λ | Δ | $w_f(k')$ | | | | $w_t(l')$ | |
|---|---|---|---|---|---|---|---|---|
| | | | k' = 0 | k' = 1 | k' = 2 | k' = 3 | l' = 0 | l' = 1 |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 1 | +1 | +1 | +1 | +1 | +1 | +1 |
| 1003 | 1 | 1 | +1 | -1 | +1 | -1 | +1 | +1 |
| 1004 | 0 | 0 | +1 | +1 | +1 | +1 | +1 | -1 |
| 1005 | 0 | 0 | +1 | -1 | +1 | -1 | +1 | -1 |
| 1006 | 1 | 1 | +1 | +1 | +1 | +1 | +1 | -1 |
| 1007 | 1 | 1 | +1 | -1 | +1 | -1 | +1 | -1 |
| 1008 | 0 | 0 | +1 | -1 | -1 | +1 | +1 | +1 |
| 1009 | 0 | 0 | +1 | +1 | -1 | -1 | +1 | +1 |
| 1010 | 1 | 1 | +1 | -1 | -1 | +1 | +1 | +1 |
| 1011 | 1 | 1 | +1 | +1 | -1 | -1 | +1 | +1 |
| 1012 | 0 | 0 | +1 | -1 | -1 | +1 | +1 | -1 |
| 1013 | 0 | 0 | +1 | +1 | -1 | -1 | +1 | -1 |
| 1014 | 1 | 1 | +1 | -1 | -1 | +1 | +1 | -1 |
| 1015 | 1 | 1 | +1 | +1 | -1 | -1 | +1 | -1 |

Table 11b: Rel-18 Type 1 DMRS parameter information

| p | CDM group $\lambda$ | $\Delta$ | $w_f(k')$ | | | | $w_t(l')$ | |
|---|---|---|---|---|---|---|---|---|
| | | | $k' = 0$ | $k' = 1$ | $k' = 2$ | $k' = 3$ | $l' = 0$ | $l' = 1$ |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 1 | +1 | +1 | +1 | +1 | +1 | +1 |
| 1003 | 1 | 1 | +1 | -1 | +1 | -1 | +1 | +1 |
| 1004 | 0 | 0 | +1 | +1 | +1 | +1 | +1 | -1 |
| 1005 | 0 | 0 | +1 | -1 | +1 | -1 | +1 | -1 |
| 1006 | 1 | 1 | +1 | +1 | +1 | +1 | +1 | -1 |
| 1007 | 1 | 1 | +1 | -1 | +1 | -1 | +1 | -1 |
| 1008 | 0 | 0 | -1 | -1 | +1 | +1 | +1 | +1 |
| 1009 | 0 | 0 | -1 | +1 | +1 | -1 | +1 | +1 |
| 1010 | 1 | 1 | -1 | -1 | +1 | +1 | +1 | +1 |
| 1011 | 1 | 1 | -1 | +1 | +1 | -1 | +1 | +1 |
| 1012 | 0 | 0 | -1 | -1 | +1 | +1 | +1 | -1 |
| 1013 | 0 | 0 | -1 | +1 | +1 | -1 | +1 | -1 |
| 1014 | 1 | 1 | -1 | -1 | +1 | +1 | +1 | -1 |
| 1015 | 1 | 1 | -1 | +1 | +1 | -1 | +1 | -1 |

By the above OCC design method, i.e., the value design of $w_f(k')$ and $w_t(l')$ above, it may enable at most eight antenna ports in the same CDM group being orthogonal, and in the case where DMRS sequences are the same, the antenna ports in the same CDM group of the Rel-18 UE and the Rel-15 UE are also orthogonal.

Based on the above Table 11a or Table 11b and the DMRS mapping formula (5), a process of mapping the DMRS sequence to the time-frequency resources of the DMRS by a sending device may include: obtaining, by the sending device, a subcarrier offset ($\Delta$), a frequency domain weighting ($w_f(k')$) and a time domain weighting ($w_t(l')$) of a CDM group corresponding to a first RE (k, l) according to parameter information table (such as the Table 11a or the Table 11b) of the DMRS, wherein the first RE (k, l) has the subcarrier index of k and the symbol index of l in the DMRS time-frequency resource; and then obtaining data $\alpha_{k,l}^{(p,\mu)}$ of the DMRS sequence mapped to the first RE (k, l) according to the subcarrier offset, the frequency domain weighting and the time domain weighting of the CDM group, $\alpha_{k,l}^{(p,\mu)}$ meeting the above formula (5).

FIG. 6 shows a schematic diagram of an Rel-18 Type 1 DMRS (or referred to as Type 3 DMRS) transmission pattern provided by an embodiment of the present disclosure. As shown in the figure, the Rel-18 Type 1 DMRS contains two CDM groups (the CDM group 0, and the CDM group 1), and a transmission pattern is repeated every eight subcarriers on the frequency domain. As shown in FIG. 6, transmission patterns of the eight REs within a dashed box 610 are the same as transmission patterns of the eight REs within a dashed box 620 and transmission patterns of the eight REs within a dashed box 630. That is to say, OCC is performed on eight REs in one CDM group, in this way, the two CDM groups can support at most sixteen orthogonal antenna ports.

It should be noted that by using the above scheme 3, the Rel-15 UE and the Rel-18 UE cannot use the same antenna port when performing MU-MIMO transmission, which may result in that DMRS resources of the Rel-15 UE and the Rel-18 UE cannot be orthogonal.

Scheme 4:

(1) a corresponding relationship between the CDM group and the antenna ports:

if a numbering rule similar to Rel-15 is used, a corresponding relationship between the CDM group and the antenna ports is as follows:

an index of antenna ports corresponding to a CDM group 0 includes: $p_b$+{0,1,2,3,8,9,10,11}; and
an index of the antenna ports corresponding to a CDM group 1 includes: $p_b$+{4,5,6,7,12,13,14,15}.

When the demodulation reference signals are uplink demodulation reference signals, $p_b = 0$, and when the demodulation reference signals are downlink demodulation reference signals, $p_b = 1000$.

By using the corresponding relationship between the CDM group and the antenna ports, serial numbers of the antenna ports in one CDM group on one symbol are continuous.

When the high-level parameter maxLength is configured as 'len2', it represents that a length of a DMRS transmission symbol is 2, and a corresponding relationship between each transmission symbol and the port may be predefined as:

the port on a first transmission symbol of the DMRS is $p_b$+{0-7}, the port on a second transmission symbol is $p_b$+{8-15}, and the corresponding relationship between the DMRS transmission symbols and the ports may also be determined through configuration or indication of a network side.

When the high-level parameter maxLength is not configured or the high-level parameter is configured as 'len1', it represents that the length of the DMRS transmission symbol is 1, and the corresponding relationship between the transmission symbols and the ports is the same as that when maxLength is configured as 'len2', then DCI may instruct the terminal to perform transmission on the first transmission symbol, or perform transmission on the second transmission symbol, and ports indicated to the terminal in the DCI may only all correspond to the ports on the first symbol, or all correspond to the ports on the second symbol.

(2) DMRS sequence mapping scheme:

The DMRS sequence may be mapped by using a formula (5).

(3) OCC design:

In this embodiment, OCC of eight antenna ports may be performed by using weightings shown in Table 6a or Table 6b. In combination with the corresponding relationship between the CDM groups and the ports, the values of the CDM group of each port, $\Delta$ and $w_f(k')$, $w_t(l')$ may be as shown in Table 12a or Table 12b:

Table 12a: Rel-18 Type 1 DMRS parameter information

| $p$ | CDM group $\lambda$ | $\Delta$ | $w_f(k')$ | | | | $w_t(l')$ | |
|---|---|---|---|---|---|---|---|---|
| | | | $k' = 0$ | $k' = 1$ | $k' = 2$ | $k' = 3$ | $l' = 0$ | $l' = 1$ |
| 1000 | 0 | 0 | +1 | +1 | +1 | +1 | +1 | +1 |
| 1001 | 0 | 0 | +1 | -1 | +1 | -1 | +1 | +1 |
| 1002 | 0 | 0 | +1 | +1 | +1 | +1 | +1 | -1 |
| 1003 | 0 | 0 | +1 | -1 | +1 | -1 | +1 | -1 |
| 1004 | 1 | 1 | +1 | +1 | +1 | +1 | +1 | +1 |
| 1005 | 1 | 1 | +1 | -1 | +1 | -1 | +1 | +1 |
| 1006 | 1 | 1 | +1 | +1 | +1 | +1 | +1 | -1 |
| 1007 | 1 | 1 | +1 | -1 | +1 | -1 | +1 | -1 |
| 1008 | 0 | 0 | +1 | -1 | -1 | +1 | +1 | +1 |
| 1009 | 0 | 0 | +1 | +1 | -1 | -1 | +1 | +1 |
| 1010 | 0 | 0 | +1 | -1 | -1 | +1 | +1 | -1 |
| 1011 | 0 | 0 | +1 | +1 | -1 | -1 | +1 | -1 |
| 1012 | 1 | 1 | +1 | -1 | -1 | +1 | +1 | +1 |
| 1013 | 1 | 1 | +1 | +1 | -1 | -1 | +1 | +1 |
| 1014 | 1 | 1 | +1 | -1 | -1 | +1 | +1 | -1 |
| 1015 | 1 | 1 | +1 | +1 | -1 | -1 | +1 | -1 |

# EP 4 503 794 A1

Table 12b: Rel-18 Type 1 DMRS parameter information

| $p$ | CDM group $\lambda$ | $\Delta$ | $w_f(k')$ | | | | $w_t(l')$ | |
|---|---|---|---|---|---|---|---|---|
| | | | $k' = 0$ | $k' = 1$ | $k' = 2$ | $k' = 3$ | $l' = 0$ | $l' = 1$ |
| 1000 | 0 | 0 | +1 | +1 | +1 | +1 | +1 | +1 |
| 1001 | 0 | 0 | +1 | -1 | +1 | -1 | +1 | +1 |
| 1002 | 0 | 0 | +1 | +1 | +1 | +1 | +1 | -1 |
| 1003 | 0 | 0 | +1 | -1 | +1 | -1 | +1 | -1 |
| 1004 | 1 | 1 | +1 | +1 | +1 | +1 | +1 | +1 |
| 1005 | 1 | 1 | +1 | -1 | +1 | -1 | +1 | +1 |
| 1006 | 1 | 1 | +1 | +1 | +1 | +1 | +1 | -1 |
| 1007 | 1 | 1 | +1 | -1 | +1 | -1 | +1 | -1 |
| 1008 | 0 | 0 | -1 | -1 | +1 | +1 | +1 | +1 |
| 1009 | 0 | 0 | -1 | +1 | +1 | -1 | +1 | +1 |
| 1010 | 0 | 0 | -1 | -1 | +1 | +1 | +1 | -1 |
| 1011 | 0 | 0 | -1 | +1 | +1 | -1 | +1 | -1 |
| 1012 | 1 | 1 | -1 | -1 | +1 | +1 | +1 | +1 |
| 1013 | 1 | 1 | -1 | +1 | +1 | -1 | +1 | +1 |
| 1014 | 1 | 1 | -1 | -1 | +1 | +1 | +1 | -1 |
| 1015 | 1 | 1 | -1 | +1 | +1 | -1 | +1 | -1 |

By the above OCC design method, i.e., the value design of $w_f(k')$ and $w_t(l')$ above, it may enable at most eight antenna ports in the same CDM group being orthogonal, and in the case where DMRS sequences are the same, the antenna ports in the same CDM group of the Rel-18 UE and the Rel-15 UE are also orthogonal.

It should be noted that by using the above scheme 4, the Rel-15 UE and the Rel-18 UE cannot use the same antenna port when performing MU-MIMO transmission, which may result in that DMRS resources of the Rel-15 UE and the Rel-18 UE cannot be orthogonal.

An embodiment of the present disclosure further provides a reference signal transmission method. The method may be applied to a system architecture shown in FIG. 1.

In some DMRS transmission scenarios, for one CDM group, time-frequency resources corresponding to the CDM group include a plurality of subcarrier groups, and the plurality of subcarrier groups adopt the same DMRS transmission pattern, i.e., the plurality of subcarrier groups correspond to the same antenna port weighting. There may be one subcarrier group that crosses a PRB, that is to say, a part of subcarriers within the subcarrier group is located in a first PRB, and the other part of subcarriers is located in a second PRB. Thus, when DMRS time-frequency resources designated (allocated) by a network device for a terminal includes an odd number of PRBs, the terminal cannot perform DMRS transmission in the mode provided by the above embodiments of the present disclosure.

For example, in an Rel-18 Type 1 DMRS transmission pattern shown by FIG. of the embodiment of the present disclosure, Rel-18 Type 1 DMRS follows a comb structure of Rel-15 Type 1 DMRS, and orthogonal transmission is performed jointly on a frequency domain at an interval of eight REs. As shown in FIG. 6, two PRBs contain three groups of REs, and each group of REs is weighted with 8OCC. If the number of PRBs scheduled for the terminal on the network side is an odd number, how to perform uplink or downlink DMRS transmission or corresponding PUSCH or PDSCH transmission is a problem that needs to be solved.

To solve the above problems, the embodiment of the present disclosure proposes the following solutions:

Solution 1: the number of RBs (or PRBs) scheduled for the terminal on the network side is always an even number, or the terminal does not expect to be scheduled with an odd number of RBs (or PRBs).

Solution 2: if the network side schedules an odd number of RBs (or PRBs) for the terminal, the terminal determines that one of the RBs (or PRBs) is not used for data transmission, or that a part of RE (several REs) of one RB (or PRB) is not used for data transmission. Correspondingly, there is no need for performing DMRS transmission on the above "one RB (or PRB)" or "the part of RE of one RB (or PRB)".

For simplicity of description, in the embodiment of the present disclosure, the "one RB (or PRB)" mentioned above, which is not used for data transmission or has a part of RE being not used for data transmission, is referred to as a

31

first RB (or PRB). Alternatively, the first RB (or PRB) may be the first RB (or PRB) scheduled on the network side, or a last RB (or PRB), or an intermediate RB (or PRB). Alternatively, the first RB (or PRB) may be pre-specified in a protocol or indicated to the terminal by the network side. "The first RB (or PRB)", "the last RB (or PRB)", and "the intermediate RB (or PRB)" may be determined according to a scheduled RB index. For example, an RB with a lowest index is the first RB, and an RB with a highest index is the last RB. Alternatively, the "part of RE" may be REs with indexes of 0 to 3 in the first RB (or PRB), or REs with indexes of 8 to 11 in the first RB (or PRB), or REs with indexes of 4 to 7 in the first RB (or PRB), which is not limited by the embodiment of the present disclosure.

Solution 3: When the network side schedules the odd number of RBs (or PRBs) for the terminal, the terminal determines that a current DMRS transmission configuration falls back to a certain DMRS transmission configuration of Rel-15 or Rel-16 (such as Type 1 DMRS or Type 2 DMRS), for example, to fall back to Rel-15 Type 1 DMRS. For example, DMRS resource mapping and transmission are performed according to a parameter information table and a mapping formula of Rel-15 Type 1 DMRS to ensure that the terminal performs DMRS transmission in the odd number of RBs (or PRBs).

The above solution 1, solution 2 and solution 3 may be applied to a case where the number of RBs (or PRBs) scheduled by the network side for the terminal is the even number when the network side is configured for the terminal to perform the 16-port DMRS transmission provided by the embodiment of the present disclosure, or other similar cases.

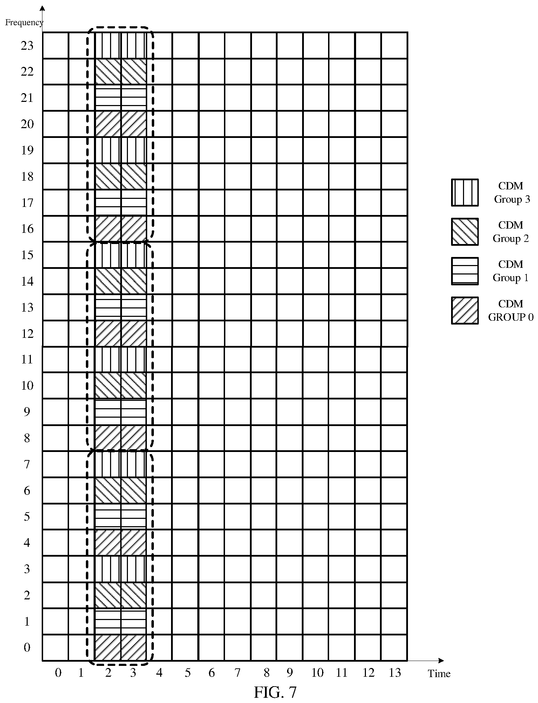

In addition to an Rel-18 Type 1 DMRS transmission pattern shown in FIG. 6 of the embodiment of the present disclosure, the above solutions may further be applied to other DMRS transmission patterns, as long as one CDM group in the transmission pattern crosses resources of two PRBs. For example, a case that eight REs are subjected to 4OCC and correspond to four CDM groups in the frequency domain is the DMRS pattern as shown in FIG. 7.

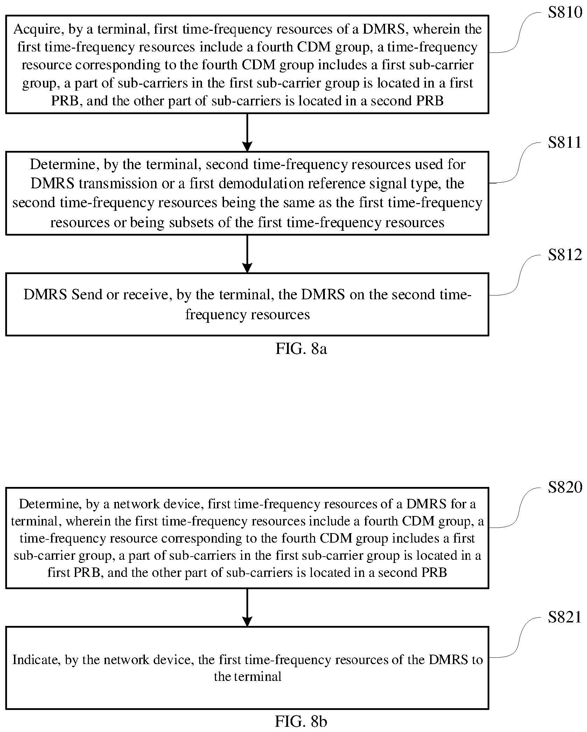

Based on the above solutions, communication methods provided by the embodiment of the present disclosure are illustrated below in conjunction with FIG. 8a and FIG. 8b, respectively.

FIG. 8a exemplarily shows a schematic flow diagram of a DMRS transmission method implemented on a terminal side provided by an embodiment of the present disclosure. As shown in the figure, the flow may include:

S810: a terminal acquires first time-frequency resources of a DMRS.

Wherein the first time-frequency resources include a fourth CDM group, a time-frequency resource corresponding to the fourth CDM group includes a first subcarrier group, a part of subcarriers in the first subcarrier group is located in a first PRB, and the other part of subcarriers is located in a second PRB. For example, when a network side configures 16-port DMRS transmission for the terminal.

S811: the terminal determines second time-frequency resources used for DMRS transmission or a first demodulation reference signal type, the second time-frequency resources being the same as the first time-frequency resources or being subsets of the first time-frequency resources.

Alternatively, the first time-frequency resources include an even number of PRBs. In one implementation, if the terminal determines that the first time-frequency resources include the even number of PRBs, the terminal determines the first time-frequency resources as the time-frequency resources used for DMRS transmission, i.e., the second time-frequency resources are the same as the first time-frequency resources. And the terminal may perform DMRS transmission on the first time-frequency resources configured by a network side.

In another implementation, if the first time-frequency resources of the DMRS include an odd number of PRBs, the terminal determines that the first PRB among the odd number of PRBs is not used for DMRS and/or data transmission; and the terminal determines the time-frequency resources in the odd number of PRBs apart from the first PRB as the second time-frequency resources used for DMRS transmission. In this case, the second time-frequency resources are subsets of the first time-frequency resources.

Alternatively, the first PRB is a first PRB, or a last PRB, or an intermediate PRB of the odd number of PRBs.

In another implementation, if the first time-frequency resources of the DMRS include an odd number of PRBs, the terminal determines that a part of RE on the first PRB among the odd number of PRBs is not used for DMRS transmission and/or data transmission; and the terminal determines the time-frequency resources in the odd number of PRBs apart from the part of RE on the first PRB as the second time-frequency resources used for DMRS transmission. In this case, the second time-frequency resources are subsets of the first time-frequency resources.

Alternatively, the first PRB is a first PRB, or a last PRB, or an intermediate PRB of the odd number of PRBs.

Alternatively, the part of REs is REs with subcarrier indexes of 0 to 3 in the first PRB, or REs with subcarrier indexes of 8 to 11 in the first PRB, or REs with subcarrier indexes of 4 to 7 in the first PRB.

In another implementation, if the first time frequency resources of the DMRS include an odd number of PRBs, the terminal determines that the first DMRS type is a Type 1 DMRS or a Type 2 DMRS. In this case, the terminal may fall back to a lower-version DMRS transmission scheme, such as the transmission scheme of the Rel-15 Type 1 DMRS or the Rel-15 Type 2 DMRS, or the Rel-16 Type 1 DMRS or the Rel-16 Type 2 DMRS. That is, the terminal may query the parameter information table of the lower-version DMRS transmission scheme according to the CDM group index and the antenna port index allocated on the network side, to obtain the corresponding antenna port weightings and other parameters, and then perform DMRS resource mapping based on the DMRS resource mapping formula of the lower-version DMRS transmission scheme, and thus the DMRS may be sent or received on the mapped time-frequency resources.

S812: the terminal sends or receives the DMRS on the second time-frequency resources.

FIG. 8b exemplarily shows a schematic flow diagram of a DMRS transmission method implemented on a network side provided by an embodiment of the present disclosure. As shown in the figure, the flow may include:

S820: a network device determines first time-frequency resources of a DMRS for a terminal.

The first time-frequency resources include a fourth CDM group, a time-frequency resource corresponding to the fourth CDM group includes a first subcarrier group, a part of subcarriers in the first subcarrier group is located in a first PRB, and the other part of subcarriers is located in a second PRB. For example, when a network side configures 16-port DMRS transmission provided for the terminal.

S821: the network device indicates the first time-frequency resources of the DMRS to the terminal.

Alternatively, the first time-frequency resources include an even number of PRBs.

Alternatively, the first time-frequency resources may also include an odd number of PRBs.

Based on the same technical concept, an embodiment of the present disclosure further provides a communication apparatus. The communication apparatus may be the terminal or the network device in the above embodiment.

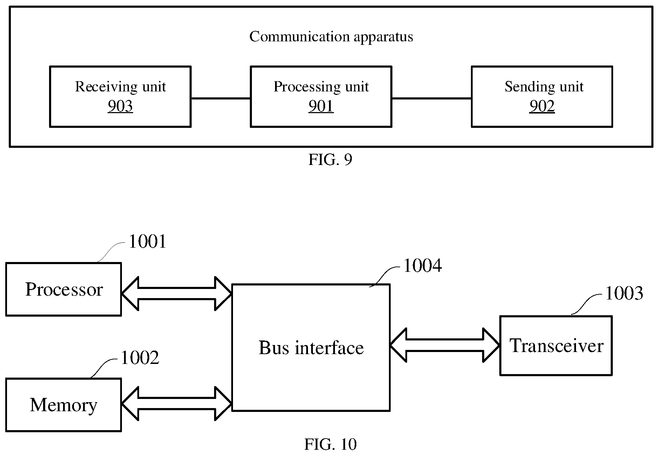

FIG. 9 exemplarily shows a communication apparatus provided by an embodiment of the present disclosure. The communication apparatus may include: a processing unit 901, a sending unit 902, and a receiving unit 903.

In an implementation, the processing unit 901 of the communication apparatus is configured to generate a sequence of demodulation reference signals; and the sending unit 902 is configured to map the sequence of the demodulation reference signals to time-frequency resources of the demodulation reference signals for transmission, the time-frequency resources including time-frequency resources corresponding to a first CDM group, the first CDM group corresponding to at most eight antenna ports, each of the at most eight antenna ports corresponding to at most four frequency domain weightings and at most two time domain weightings, wherein antenna port weightings of a first antenna port and a second antenna port in the at most eight antenna ports are orthogonal.

It should be noted here that the above communication apparatus provided by the embodiment of the present disclosure can implement all the method steps implemented by the sending device in FIG. 4 in the above method embodiments, and can achieve the same technical effect, and the parts and beneficial effects same as the method embodiments in this embodiment will not be described in detail here.

In an implementation, the receiving unit 903 of the communication apparatus is configured to receive the demodulation reference signals sent by the sending device on the time-frequency resources of the demodulation reference signals, the time-frequency resources including the time-frequency resources corresponding to the first CDM group, the first CDM group corresponding to the at most eight antenna ports, each of the at most eight antenna ports corresponding to the at most four frequency domain weightings and the at most two time domain weightings, and the antenna port weightings of the first antenna port and the second antenna port in the at most eight antenna ports being orthogonal; and the processing unit 901 is configured to obtain the sequence of the demodulation reference signals.

It should be noted here that the above communication apparatus provided by the embodiment of the present disclosure can implement all the method steps implemented by the receiving device in FIG. 4 in the above method embodiments, and can achieve the same technical effect, and the parts and beneficial effects same as the method embodiments in this embodiment will not be described in detail here.

In an implementation, the processing unit 901 of the communication apparatus is configured to acquire the first time-frequency resources of the demodulation reference signals, wherein the first time-frequency resources include a fourth CDM group, a time-frequency resource corresponding to the fourth CDM group includes a first subcarrier group, a part of subcarriers in the first subcarrier group is located in a first physical resource block (PRB), and the other part of subcarriers is located in a second PRB; and determine second time-frequency resources used for transmission of the demodulation reference signals or a first demodulation reference signal type, the second time-frequency resources being the same as the first time-frequency resources or being subsets of the first time-frequency resources. The sending unit 902 is configured to send the demodulation reference signals on the second time-frequency resources; or, the receiving unit is configured to receive the demodulation reference signals on the second time-frequency resources.

It should be noted here that the above communication apparatusprovided by the embodiment of the present disclosure can implement all the method steps implemented by the terminal in FIG. 7 in the above method embodiments, and can achieve the same technical effect, and the parts and beneficial effects same as the method embodiments in this embodiment will not be described in detail here.

In an implementation, the receiving unit 903 of the communication apparatus is configured to determine the first time-frequency resources of the demodulation reference signals for the terminal, wherein the first time-frequency resources include the fourth CDM group, the time-frequency resource corresponding to the fourth CDM group includes the first subcarrier group, the part of subcarriers in the first subcarrier group is located in the first physical resource block (PRB), and the other part of subcarriers is located in the second PRB; and the sending unit 902 is configured to indicate the first time-frequency resources of the demodulation reference signals to the terminal.

It should be noted here that the above communication apparatus provided by the embodiment of the present

**EP 4 503 794 A1**

disclosure can implement all the method steps implemented by the network device in FIG. 8b in the above method embodiments, or can implement all the method steps implemented by the terminal in FIG. 8a in the above method embodiments, and can achieve the same technical effect, and the parts and beneficial effects same as the method embodiments in this embodiment will not be described in detail here.

Based on the same technical concept, an embodiment of the present disclosure further provides a communication apparatus that can implement the functions of the corresponding devices in the aforementioned embodiments.

FIG. 10 exemplarily shows a schematic structural diagram of a communication apparatus in an embodiment of the present disclosure. As shown in figure, the communication apparatus may include: a processor 1001, a memory 1002, a transceiver 1003 and a bus interface 1004.

The processor 1001 is responsible for managing the bus architecture and usual processing, and the memory 1002 may store data used by the processor 1001 during operation execution. The transceiver 1003 is configured to receive and send data under control of the processor 1001.

The bus architecture may include any quantity of interconnected buses and bridges, which are specifically linked together by various circuits of one or more processors represented by the processor 1001 and a memory represented by the memory 1002. The bus architecture may further link various other circuits such as a peripheral device, a voltage stabilizer and a power management circuit together, which are publicly known in the art and therefore are not further described herein. The bus interface provides an interface. The processor 1001 is responsible for managing the bus architecture and usual processing, and the memory 1002 may store data used by the processor 1001 during operation execution.

A flow disclosed in the embodiment of the present disclosure may be applied to the processor 1001 or be implemented by the processor 1001. In an implementation process, all steps of a signal processing flow may be completed through an integrated logic circuit of hardware in the processor 1001 or through instructions in a software form. The processor 1001 may be a general-purpose processor, a digital signal processor, an application specific integrated circuit, a field-programmable gate array or other programmable logic devices, a discrete gate or a transistor logic device, a discrete hardware component, which can implement or execute all the methods, steps and logic block diagrams disclosed in the embodiment of the present disclosure. The general-purpose processor may be a microprocessor or any conventional processor, etc. The steps of the method disclosed in combination with the embodiment of the present disclosure may be directly embodied as being executed and completed by a hardware processor, or be executed and completed by a hardware and software module combination in the processor. A software module may be located in a random access memory, a flash memory, a read only memory, a programmable read only memory, or an electrically erasable programmable memory, a register and other mature storage mediums in the art. The storage medium is located in the memory 1002, and the processor 1001 reads information in the memory 1002, and is combined with its hardware to complete the steps of the signal processing flow.

Specifically, the processor 1001 is configured to read computer instructions in the memory 1002 and execute functions implemented by the corresponding devices in the flow shown in FIG. 4, FIG. 7, FIG. 8a or FIG. 8b.

It should be noted here that the above communication apparatus provided by the embodiments of the present disclosure can implement all the method steps implemented by the above method embodiments, and can achieve the same technical effect, and the parts and beneficial effects same as the method embodiments in the present embodiment will not be described in detail here.

An embodiment of the present disclosure further provides a non-volatile computer readable storage medium. The computer readable storage medium stores computer executable instructions, and the computer executable instructions are used for causing a computer to execute the methods executed by the corresponding devices in the above embodiments.

Those skilled in the art should understand that the embodiment of the present disclosure may be provided as a method, a system or a computer program product. Therefore, the present disclosure may adopt forms of full hardware embodiments, full software embodiments, or embodiments combining software and hardware aspects. Moreover, the present disclosure can adopt a form of the computer program products implemented on one or more computer available storage mediums (including but not limited to a disk memory, CD-ROM, an optical memory and the like) containing computer available program codes.

The present disclosure is described with reference to flow diagrams and/or block diagrams of the methods, the devices (systems), and computer program products according to the present disclosure. It should be understood that each flow and/or block in the flow diagrams and/or the block diagrams and combinations of the flows and/or the blocks in the flow diagrams and/or the block diagrams can be implemented by computer program instructions. These computer program instructions may be provided to a processor of a general-purpose computer, a special-purpose computer, an embedded processing machine or other programmable data processing devices to generate a machine, such that the instructions, when executed by the processor of the computer or other programmable data processing devices, generate an apparatus for implementing functions specified in one or more flows in the flow diagrams and/or one or more blocks in the block diagrams.

These computer program instructions may also be stored in a computer readable memory which can guide the computer or other programmable data processing devices to work in a specific mode, thus the instructions stored in the computer readable memory generates an article of manufacture that includes a commander apparatus that implement the functions specified in one or more flows in the flow diagrams and/or one or more blocks in the block diagrams.

These computer program instructions may also be loaded to the computer or other programmable data processing devices, and thus a series of operating steps are executed on the computer or other programmable devices to generate computer-implemented processing, such that the instructions executed on the computer or other programmable devices provide steps for implementing the functions specified in one or more flows in the flow diagrams and/or one or more blocks in the block diagrams.

Apparently, those skilled in the art can make various modifications and variations to the present disclosure without departing from the spirit and scope of the present disclosure. In this way, if these modifications and variations of the present disclosure fall within the scope of the claims of the present disclosure and their equivalent art, the present disclosure also intends to include these modifications and variations.

**Claims**

1. A reference signal transmission method, **characterized in that**, comprising:

   generating, by a sending device, a sequence of demodulation reference signals; and
   mapping, by the sending device, the sequence of the demodulation reference signals to time-frequency resources of the demodulation reference signals for transmission, wherein the time-frequency resources comprises time-frequency resources corresponding to a first code division multiplexing (CDM) group, the first CDM group corresponds to at most eight antenna ports, each of the at most eight antenna ports corresponds to at most four frequency domain weightings and at most two time domain weightings, wherein antenna port weightings of a first antenna port and a second antenna port in the at most eight antenna ports are orthogonal.

2. The method according to claim 1, **characterized in that**, there is a corresponding relationship among an antenna port index corresponding to the demodulation reference signals, a CDM group subcarrier offset and antenna port weightings, wherein the antenna port weightings comprise four frequency domain weightings and at most two time domain weightings.

3. The method according to claim 2, **characterized in that**, the eight antenna ports corresponding to the first CDM group comprise the first antenna port, the second antenna port, an third antenna port, ... , to an eighth antenna port, and four frequency domain weightings and at most two time domain weightings respectively corresponding to the first antenna port to the eighth antenna port comprise:

| Antenna port | $w_f(k')$ | | | | $w_t(l')$ | |
| --- | --- | --- | --- | --- | --- | --- |
| | $k' = k_0$ | $k' = k_1$ | $k' = k_2$ | $k' = k_3$ | $l' = l'_0$ | $l' = l'_1$ |
| First antenna port | +1 | +1 | +1 | +1 | +1 | +1 |
| Second antenna port | +1 | -1 | +1 | -1 | +1 | +1 |
| Third antenna port | +1 | +1 | +1 | +1 | +1 | -1 |
| Fourth antenna port | +1 | -1 | +1 | -1 | +1 | -1 |
| Fifth antenna port | +1 | -1 | -1 | +1 | +1 | +1 |
| Sixth antenna port | +1 | +1 | -1 | -1 | +1 | +1 |
| Seventh antenna port | +1 | -1 | -1 | +1 | +1 | -1 |
| Eighth antenna port | +1 | +1 | -1 | -1 | +1 | -1 |

or,

| Antenna port | $w_f(k')$ | | | | $w_t(l')$ | |
|---|---|---|---|---|---|---|
| | $k' = k_0$ | $k' = k_1$ | $k' = k_2$ | $k' = k_3$ | $l' = l'_0$ | $l' = l'_1$ |
| First antenna port | +1 | +1 | +1 | +1 | +1 | +1 |
| Second antenna port | +1 | -1 | +1 | -1 | +1 | +1 |
| Third antenna port | +1 | +1 | +1 | +1 | +1 | -1 |
| Fourth antenna port | +1 | -1 | +1 | -1 | +1 | -1 |
| Fifth antenna port | -1 | -1 | +1 | +1 | +1 | +1 |
| Sixth antenna port | -1 | +1 | +1 | -1 | +1 | +1 |
| Seventh antenna port | -1 | -1 | +1 | +1 | +1 | -1 |
| Eighth antenna port | -1 | +1 | +1 | -1 | +1 | -1 |

wherein, $w_f(k')$ is the frequency domain weighting, $w_t(l')$ is the time domain weighting, k' is a first weighting index of the demodulation reference signals, and l' is a second weighting index of the demodulation reference signals.

4. The method according to claim 3, **characterized in that**, the first weighting index is used for determining a subcarrier position of the demodulation reference signals, and the second weighting index is used for determining a symbol position of the demodulation reference signals.

5. The method according to claim 3, **characterized in that**, $l'_0 = 0$, frequency domain weightings of specific antenna ports among the first antenna port to the eighth antenna port are orthogonal; or

$l'_1 = 1$, the frequency domain weightings of the specific antenna ports among the first antenna port to the eighth antenna port are orthogonal; or
$l'_0 = 0$, $l'_1 = 1$, inner products of the frequency domain weightings and time domain weightings of the specific antenna ports among the first antenna port to the eighth antenna port are orthogonal.

6. The method according to any one of claims 3 to 5, **characterized in that**, $k_0 = 0$, $k_1 = 1$, $k_2 = 6$, and $k_3 = 7$; or $k_0 = 0$, $k_1 = 1$, $k_2 = 2$, and $k_3 = 3$.

7. The method according to any one of claims 1 to 6, **characterized in that**, the time-frequency resources of the demodulation reference signals further comprise time-frequency resources corresponding to a second CDM group, the second CDM group corresponds to at most eight antenna ports, and each of the eight antenna ports corresponds to four frequency domain weightings and at most two time domain weightings.

8. The method according to claim 7, **characterized in that**, the antenna ports corresponding to the first CDM group and the second CDM group comprise:

an index of the antenna ports corresponding to the first CDM group comprising: $p_b + \{0,1,2,3,8,9,10,11\}$; and
an index of the antenna ports corresponding to the second CDM group comprising: $p_b + \{4,5,6,7,12,13,14,15\}$;
or, the antenna ports corresponding to the first CDM group and the second CDM group comprise:

the index of the antenna ports corresponding to the first CDM group comprising: $p_b + \{0,1,4,5,8,9,12,13\}$; and
the index of the antenna ports corresponding to the second CDM group comprising: $p_b + \{2,3,6,7,10,11,14,15\}$, wherein
when the demodulation reference signals are uplink signals, $p_b = 0$, and when the demodulation reference signals are downlink signals, $p_b = 1000$.

9. The method according to any one of claims 2 to 8, **characterized in that**, mapping, by the sending device, the sequence of the demodulation reference signals to the time-frequency resources of the demodulation reference signals comprises:
mapping, by the sending device, the sequence of the demodulation reference signals to the time-frequency resources of the demodulation reference signals according to the corresponding relationship among the antenna port index corresponding to the demodulation reference signals, the CDM group subcarrier offset and port weightings of the demodulation reference signals based on the following formula:

$$\alpha_{k,l}^{(p,\mu)} = \beta_{DMRS} w_f(k') w_t(l') r(cn + k')$$

$$k = dn + 2k' + \Delta$$

$$k' = 0,1,2,3$$

$$l = \bar{l} + l'$$

$$n = 0,1, \dots$$

wherein, $\alpha_{k,l}^{(p,\mu)}$ is a value of the sequence of the demodulation reference signals mapped on a first RE (k, l), and a subcarrier index and a symbol index of the first RE (k, l) is k and l respectively; $\beta_{DMRS}$ is an amplitude scale factor; $w_f(k')$ is the frequency domain weighting, and $w_t(l')$ is the time domain weighting; $r(cn + k')$ is the sequence of the DMRS; $\Delta$ is the CDM group subcarrier offset; $\bar{l}$ is an index of a start symbol of the demodulation reference signals, k' is the first weighting index of the demodulation reference signals, and l' is the second weighting index of the demodulation reference signals; $\mu$ is a subcarrier spacing; and c=4, and d=8.

10. The method according to claim 1, **characterized in that**, the time-frequency resources of the demodulation reference signals further comprise time-frequency resources corresponding to a second CDM group and time-frequency resources corresponding to a third CDM group, the second CDM group and the third CDM group respectively correspond to at most eight antenna ports, and each of the eight antenna ports corresponds to four frequency domain weightings and at most two time domain weightings.

11. The method according to claim 10, **characterized in that**, the antenna ports corresponding to the first CDM group, the second CDM group and the third CDM group comprise:

an index of the antenna ports corresponding to the first CDM group comprising: $p_b$ + {0,1,6,7,12,13,18,19};
an index of the antenna ports corresponding to the second CDM group comprising: $p_b$ + {2,3,8,9,14,15,20,21}; and
an index of the antenna ports corresponding to the third CDM group comprising: $p_b$ + {4,5,10,11,16,17,22,23}; or, the antenna ports corresponding to the first CDM group, the second CDM group and the third CDM group comprise:

the index of the antenna ports corresponding to the first CDM group comprising: $p_b$ + {0,1,2,3,12,13,14,15};
the index of the antenna ports corresponding to the second CDM group comprising: $p_b$ + {4,5,6,7,16,17,18,19}; and
the index of the antenna ports corresponding to the third CDM group comprising: $p_b$ + {8,9,10,11,20,21,22,23}, wherein
when the demodulation reference signals are uplink signals, $p_b$ = 0, and when the demodulation reference signals are downlink signals, $p_b$ = 1000.

12. The method according to claim 10, **characterized in that**, mapping, by the sending device, the sequence of the demodulation reference signals to the time-frequency resources of the demodulation reference signals comprises: mapping, by the sending device, the sequence of the demodulation reference signals to the time-frequency resources of the demodulation reference signals according to a corresponding relationship among an antenna port index corresponding to the demodulation reference signals, a CDM group subcarrier offset and port weightings of the demodulation reference signals based on the following formula:

$$\alpha_{k,l}^{(p,\mu)} = \beta_{DMRS} w_f(k') w_t(l') r(cn + k')$$

$$k = dn + k' + \Delta$$

$$k' = 0,1,6,7$$

$$l = \bar{l} + l'$$

$$n = 0,1,\ldots$$

wherein, $\alpha_{k,l}^{(p,\mu)}$ is a numerical value of the sequence of the demodulation reference signals mapped on a first RE (k, l), and the first RE (k, l) has a subcarrier index of k, and a symbol index of l; $\beta_{DMRS}$ is an amplitude scale factor; $w_f(k')$ is a frequency domain weighting, and $w_t(l')$ is a time domain weighting; $r(cn + k')$ is the sequence of the DMRS; $\Delta$ is the CDM group subcarrier offset; 1 is an index of a start symbol of the demodulation reference signals, k' is a first weighting index of the demodulation reference signals, and l' is a second weighting index of the demodulation reference signals; $\mu$ is a subcarrier spacing; and c=2 or 4, and d=12.

13. The method according to claim 10, **characterized in that**, mapping, by the sending device, the sequence of the demodulation reference signals to the time-frequency resources of the demodulation reference signals comprises: mapping, by the sending device, the sequence of the demodulation reference signals to the time-frequency resources of the demodulation reference signals according to a corresponding relationship among an antenna port index corresponding to the demodulation reference signals, a CDM group subcarrier offset and port weightings of the demodulation reference signals based on the following formula:

$$\alpha_{k,l}^{(p,\mu)} = \beta_{DMRS} w_f(k') w_t(l') r(cn + k')$$

$$k = dn + k'' + \Delta$$

$$k' = 0,1,2,3$$

$$l = \bar{l} + l'$$

$$n = 0,1,\ldots$$

wherein, $\alpha_{k,l}^{(p,\mu)}$ is a value of the sequence of the demodulation reference signals mapped on a first RE (k, l), and the first RE (k, l) has a subcarrier index of k, and a symbol index of l; $\beta_{DMRS}$ is an amplitude scale factor; $w_f(k')$ is a frequency domain weighting, and $w_t(l')$ is a time domain weighting; $r(cn + k')$ is the sequence of the DMRS; $\Delta$ is the CDM group subcarrier offset; 1 is an index of a start symbol of the demodulation reference signals, k' is a first weighting index of the demodulation reference signals, and l' is a second weighting index of the demodulation reference signals; c=4, and d=12, $\mu$ is a subcarrier spacing; and a corresponding relationship between k" and k' comprises:

| k' | k" |
|----|----|
| 0  | 0  |
| 1  | 1  |
| 2  | 6  |
| 3  | 7  |

wherein, when k' = 0 or 1, k" = k', and when k' = 2 or 3, k" = k' + 4.

14. The method according to claim 1, **characterized in that**, the sending device is a terminal, and the method further comprises:
acquiring, by the terminal, first time-frequency resources of the demodulation reference signals, wherein the first time-frequency resources comprise a fourth code division multiplexing (CDM) group, the fourth CDM group corresponds to at most eight antenna ports, each of the at most eight antenna ports corresponds to at most four frequency domain weightings and at most two time domain weightings, and antenna port weightings of a first antenna port and a second antenna port in the at most eight antenna ports are orthogonal.

15. The method according to claim 14, **characterized in that**, the first time-frequency resources comprise an even number of physical resource blocks (PRBs).

16. The method according to claim 14, further comprising:

   determining, by the terminal, second time-frequency resources used for transmission of the demodulation reference signals or a first demodulation reference signal type, the second time-frequency resources being the same as the first time-frequency resources or being subsets of the first time-frequency resources; and
   sending, by the terminal, the demodulation reference signals on the second time-frequency resources.

17. The method according to claim 16, **characterized in that**, determining, by the terminal, the second time-frequency resource used for transmission of the demodulation reference signals comprises:

   determining, by the terminal, that the first time-frequency resources comprise an even number of PRBs; and
   determining, by the terminal, the first time-frequency resources as the second time-frequency resources used for transmission of the demodulation reference signals.

18. The method according to claim 14, **characterized in that**, a time-frequency resource corresponding to the fourth CDM group comprises a first subcarrier group, a part of subcarriers in the first subcarrier group is located in a first physical resource block (PRB), and the other part of subcarriers is located in a second PRB.

19. The method according to claim 16, **characterized in that**, determining, by the terminal, the second time-frequency resources used for transmission of the demodulation reference signals comprises:
determining, by the terminal, time-frequency resources in the odd number of PRBs apart from the first PRB as the second time-frequency resources used for transmission of the demodulation reference signals based on that the first time-frequency resources comprise an odd number of PRBs.

20. The method according to claim 16, **characterized in that**, determining, by the terminal, the second time-frequency resources used for transmission of the demodulation reference signals comprises:
determining, by the terminal, time-frequency resources in the odd number of PRBs apart from a part of REs on the first PRB as the second time-frequency resources used for transmission of the demodulation reference signals based on that the first time-frequency resources comprise an odd number of PRBs.

21. The method according to claim 20, **characterized in that**, the part of REs is REs with subcarrier indexes of 0 to 3 in the first PRB, or REs with subcarrier indexes of 8 to 11 in the first PRB, or REs with subcarrier indexes of 4 to 7 in the first PRB.

22. The method according to claim 20 or 21, **characterized in that**, the first PRB is a first PRB, or a last PRB, or an intermediate PRB of the odd number of PRBs.

23. The method according to claim 16, **characterized in that**, determining, by the terminal, the second time-frequency resources used for transmission of the demodulation reference signals comprises: determining, by the terminal, that the first demodulation reference signal type is a Type 1 DMRS or a Type 2 DMRS based on that the first time frequency resources comprise an odd number of PRBs.

24. A reference signal transmission method, **characterized by** comprising:

   receiving, by a receiving device, demodulation reference signals sent by a sending device on time-frequency resources of the demodulation reference signals, wherein the time-frequency resources comprises time-frequency resources corresponding to a first code division multiplexing (CDM) group, the first CDM group corresponds to at most eight antenna ports, each of the at most eight antenna ports corresponds to at most four frequency domain weightings and at most two time domain weightings, and antenna port weightings of a first antenna port and a second antenna port in the at most eight antenna ports are orthogonal; and

obtaining, by the receiving device, a sequence of the demodulation reference signals.

25. The method according to claim 24, **characterized in that**, there is a corresponding relationship between an antenna port index corresponding to the demodulation reference signals, a CDM group subcarrier offset and antenna port weightings, wherein the antenna port weightings comprise four frequency domain weightings and at most two time domain weightings.

26. The method according to claim 25, **characterized in that**, the eight antenna ports corresponding to the first CDM group comprise the first antenna port, the second antenna port, a third antenna port, ..., to an eighth antenna port, and four frequency domain weightings and at most two time domain weightings respectively corresponding to the first antenna port to the eighth antenna port comprise:

| Antenna port | $w_f(k')$ | | | | $w_t(l')$ | |
|---|---|---|---|---|---|---|
| | $k' = k_0$ | $k' = k_1$ | $k' = k_2$ | $k' = k_3$ | $l' = l'_0$ | $l' = l'_1$ |
| First antenna port | +1 | +1 | +1 | +1 | +1 | +1 |
| Second antenna port | +1 | -1 | +1 | -1 | +1 | +1 |
| Third antenna port | +1 | +1 | +1 | +1 | +1 | -1 |
| Fourth antenna port | +1 | -1 | +1 | -1 | +1 | -1 |
| Fifth antenna port | +1 | -1 | -1 | +1 | +1 | +1 |
| Sixth antenna port | +1 | +1 | -1 | -1 | +1 | +1 |
| Seventh antenna port | +1 | -1 | -1 | +1 | +1 | -1 |
| Eighth antenna port | +1 | +1 | -1 | -1 | +1 | -1 |

or,

| Antenna port | $w_f(k')$ | | | | $w_t(l')$ | |
|---|---|---|---|---|---|---|
| | $k' = k_0$ | $k' = k_1$ | $k' = k_2$ | $k' = k_3$ | $l' = l'_0$ | $l' = l'_1$ |
| First antenna port | +1 | +1 | +1 | +1 | +1 | +1 |
| Second antenna port | +1 | -1 | +1 | -1 | +1 | +1 |
| Third antenna port | +1 | +1 | +1 | +1 | +1 | -1 |
| Fourth antenna port | +1 | -1 | +1 | -1 | +1 | -1 |
| Fifth antenna port | -1 | -1 | +1 | +1 | +1 | +1 |
| Sixth antenna port | -1 | +1 | +1 | -1 | +1 | +1 |
| Seventh antenna port | -1 | -1 | +1 | +1 | +1 | -1 |
| Eighth antenna port | -1 | +1 | +1 | -1 | +1 | -1 |

wherein, $w_f(k')$ is the frequency domain weighting, $w_t(l')$ is the time domain weighting, k' is a first weighting index of the demodulation reference signals, and l' is a second weighting index of the demodulation reference signals.

27. The method according to claim 26, **characterized in that**, the first weighting index is used for determining a subcarrier position of the demodulation reference signals, and the second weighting index is used for determining a symbol position of the demodulation reference signals.

28. The method according to claim 26, **characterized in that**, $l'_0 = 0$, frequency domain weightings of specified antenna ports among the first antenna port to the eighth antenna port are orthogonal; or

$l'_1 = 1$, the frequency domain weightings of the specified antenna ports among the first antenna port to the eighth antenna port are orthogonal; or

$l'_0 = 0$, $l'_1 = 1$, inner products of the frequency domain weightings and time domain weightings of the specified antenna ports among the first antenna port to the eighth antenna port are orthogonal.

29. The method according to any one of claims 26 to 28, **characterized in that**, $k_0 = 0$, $k_1 = 1$, $k_2 = 6$, and $k_3 = 0$; or $k_0 = 0$, $k_1 = 1$, $k_2 = 2$, and $k_3 = 3$.

30. The method according to any one of claims 24 to 29, **characterized in that**, the time-frequency resources of the demodulation reference signals further comprise time-frequency resources corresponding to a second CDM group, the second CDM group corresponds to at most eight antenna ports, and each of the eight antenna ports corresponds to four frequency domain weightings and at most two time domain weightings.

31. The method according to claim 30, **characterized in that**, the antenna ports corresponding to the first CDM group and the second CDM group comprise:

an index of the antenna ports corresponding to the first CDM group comprising: $p_b + \{0,1, 2, 3, 8,9,10,11\}$;and
an index of the antenna ports corresponding to the second CDM group comprising: $p_b + \{4,5,6,7,12,13,14,15\}$; or, the antenna ports corresponding to the first CDM group and the second CDM group comprise:

the index of the antenna ports corresponding to the first CDM group comprising: $p_b + \{0,1,4, 5, 8,9,12,13\}$;and
the index of the antenna ports corresponding to the second CDM group comprising: $p_b + \{2,3,6,7,10,11,14,15\}$, wherein
when the demodulation reference signals are uplink signals, $p_b = 0$, and when the demodulation reference signals are downlink signals, $p_b = 1000$.

32. The method according to any one of claims 25 to 31, **characterized in that**, mapping, by the sending device, the sequence of the demodulation reference signals to the time-frequency resources of the demodulation reference signals comprises:

mapping, by the sending device, the sequence of the demodulation reference signals to the time-frequency resources of the demodulation reference signals according to the corresponding relationship among the antenna port index corresponding to the demodulation reference signals, the CDM group subcarrier offset and the port weightings of the demodulation reference signals based on the following formula:

$$\alpha_{k,l}^{(p,\mu)} = \beta_{DMRS} w_f(k') w_t(l') r(cn + k')$$

$$k = dn + 2k' + \Delta$$

$$k' = 0,1,2,3$$

$$l = \bar{l} + l'$$

$$n = 0,1, \ldots$$

wherein, $\alpha_{k,l}^{(p,\mu)}$ is a numerical value of the sequence of the demodulation reference signals mapped on a first RE (k, l), and the first RE (k, l) has a subcarrier index of k, and a symbol index of l; $\beta_{DMRS}$ is an amplitude scale factor; $w_f(k')$ is the frequency domain weighting, and $w_t(l')$ is the time domain weighting; $r(cn + k')$ is the sequence of the DMRS; $\Delta$ is the CDM group subcarrier offset; $\bar{l}$ is an index of a start symbol of the demodulation reference signals, k' is the first weighting index of the demodulation reference signals, and l' is the second weighting index of the demodulation reference signals; $\mu$ is a subcarrier spacing; and c=4, and d=8.

33. The method according to claim 24, **characterized in that**, the time-frequency resources of the demodulation reference signals further comprise time-frequency resources corresponding to a second CDM group and time-frequency resources corresponding to a third CDM group, the second CDM group and the third CDM group respectively correspond to at most eight antenna ports, and each of the eight antenna ports corresponds to four frequency domain weightings and at most two time domain weightings.

34. The method according to claim 33, **characterized in that**, the antenna ports corresponding to the first CDM group, the second CDM group and the third CDM group comprise:

an index of the antenna ports corresponding to the first CDM group comprising: $p_b$ + {0,1,6,7,12,13,18,19};
an index of the antenna ports corresponding to the second CDM group comprising: $p_b$ + {2,3,8,9,14,15,20,21}; and
an index of the antenna ports corresponding to the third CDM group comprising: $p_b$ + {4,5,10,11,16,17,22,23}; or, the antenna ports corresponding to the first CDM group, the second CDM group and the third CDM group comprise:

the index of the antenna ports corresponding to the first CDM group comprising: $p_b$ + {0,1,2,3,12,13,14,15};
the index of the antenna ports corresponding to the second CDM group comprising: $p_b$ + {4,5,6,7,16,17,18,19}; and
the index of the antenna ports corresponding to the third CDM group comprising: $p_b$ + {8,9,10,11,20,21,22,23}, wherein
when the demodulation reference signals are uplink signals, $p_b$ = 0, and when the demodulation reference signals are downlink signals, $p_b$ = 1000.

35. The method according to claim 33, **characterized in that**, mapping, by the sending device, the sequence of the demodulation reference signals to the time-frequency resources of the demodulation reference signals comprises: mapping, by the sending device, the sequence of the demodulation reference signals to the time-frequency resources of the demodulation reference signals according to a corresponding relationship among an antenna port index corresponding to the demodulation reference signals, a CDM group subcarrier offset and port weightings of the demodulation reference signals based on the following formula:

$$\alpha_{k,l}^{(p,\mu)} = \beta_{DMRS} w_f(k') w_t(l') r(cn + k')$$

$$k = dn + k' + \Delta$$

$$k' = 0,1,6,7$$

$$l = \bar{l} + l'$$

$$n = 0,1, \dots$$

wherein, $\alpha_{k,l}^{(p,\mu)}$ is a numerical value of the sequence of the demodulation reference signals mapped on a first RE (k, l), and the first RE (k, l) has a subcarrier index of k, and a symbol index of l; $\beta_{DMRS}$ is an amplitude scale factor; $w_f(k')$ is a frequency domain weighting, and $w_t(l')$ is a time domain weighting; $r(cn + k')$ is the sequence of the DMRS; $\Delta$ is the CDM group subcarrier offset; 1 is an index of a start symbol of the demodulation reference signals, k' is a first weighting index of the demodulation reference signals, and l' is a second weighting index of the demodulation reference signals; $\mu$ is a subcarrier spacing; and c=2 or 4, and d=12.

36. The method according to claim 33, **characterized in that**, mapping, by the sending device, the sequence of the demodulation reference signals to the time-frequency resources of the demodulation reference signals comprises: mapping, by the sending device, the sequence of the demodulation reference signals to the time-frequency resources of the demodulation reference signals according to a corresponding relationship among an antenna port index corresponding to the demodulation reference signals, a CDM group subcarrier offset and port weightings of the demodulation reference signals based on the following formula:

$$\alpha_{k,l}^{(p,\mu)} = \beta_{DMRS} w_f(k') w_t(l') r(cn + k')$$

$$k = dn + k'' + \Delta$$

$$k' = 0,1,2,3$$

$$l = \bar{l} + l'$$

$$n = 0,1, \ldots$$

wherein, $\alpha_{k,l}^{(p,\mu)}$ is a numerical value of the sequence of the demodulation reference signals mapped on a first RE (k, l), and the first RE (k, l) has a subcarrier index of k, and a symbol index of l; $\beta_{DMRS}$ is an amplitude scale factor; $w_f(k')$ is a frequency domain weighting, and $w_t(l')$ is a time domain weighting; $r(cn + k')$ is the sequence of the DMRS; $\Delta$ is the CDM group subcarrier offset; 1 is an index of a start symbol of the demodulation reference signals, k' is a first weighting index of the demodulation reference signals, and l' is a second weighting index of the demodulation reference signals; c=4, and d=12, $\mu$ is a subcarrier spacing; and a corresponding relationship between k" and k' comprises:

| k' | k" |
|----|----|
| 0  | 0  |
| 1  | 1  |
| 2  | 6  |
| 3  | 7  |

wherein, when k' = 0 or 1, k" = k', and when k' = 2 or 3, k" = k' + 4.

**37.** The method according to claim 24, **characterized in that**, the receiving device is a terminal, and the method further comprises:
acquiring, by the terminal, first time-frequency resources of the demodulation reference signals, wherein the first time-frequency resources comprise a fourth code division multiplexing (CDM) group, the fourth CDM group corresponds to at most eight antenna ports, each of the at most eight antenna ports corresponds to at most four frequency domain weightings and at most two time domain weightings, and antenna port weightings of a first antenna port and a second antenna port in the at most eight antenna ports are orthogonal.

**38.** The method according to claim 37, **characterized in that**, the first time-frequency resources comprise an even number of PRBs.

**39.** The method according to claim 37, further comprising:

determining, by the terminal, second time-frequency resources used for transmission of the demodulation reference signals or a first demodulation reference signal type, the second time-frequency resources being the same as the first time-frequency resources or being subsets of the first time-frequency resources; and receiving, by the terminal, the demodulation reference signals on the second time-frequency resources.

**40.** The method according to claim 39, **characterized in that**, determining, by the terminal, the second time-frequency resources used for transmission of the demodulation reference signals comprises:

determining, by the terminal, that the first time-frequency resources comprise an even number of PRBs; determining, by the terminal, the first time-frequency resources as the second time-frequency resources used for transmission of the demodulation reference signals.

**41.** The method according to claim 37, **characterized in that**, a time-frequency resource corresponding to the fourth CDM group comprises a first subcarrier group, wherein a part of subcarriers in the first subcarrier group is located in a first physical resource block (PRB), and the other part of subcarriers is located in a second PRB.

42. The method according to claim 39, **characterized in that**, determining, by the terminal, the second time-frequency resources used for transmission of the demodulation reference signals comprises:
determining, by the terminal, time-frequency resources in the odd number of PRBs apart from the first PRB as second time-frequency resources used for transmission of the demodulation reference signals based on that the first time-frequency resources comprise an odd number of PRBs.

43. The method according to claim 39, **characterized in that**, determining, by the terminal, the second time-frequency resources used for transmission of the demodulation reference signals comprises:
determining, by the terminal, time-frequency resources in the odd number of PRBs apart from a part of REs on the first PRB as second time-frequency resources used for transmission of the demodulation reference signals based on that the first time-frequency resources comprise an odd number of PRBs.

44. The method according to claim 43, **characterized in that**, the part of REs is REs with subcarrier indexes of 0 to 3 in the first PRB, or REs with subcarrier indexes of 8 to 11 in the first PRB, or REs with subcarrier indexes of 4 to 7 in the first PRB.

45. The method according to claim 43 or 44, **characterized in that**, the first PRB is a first PRB, or a last PRB, or an intermediate PRB of the odd number of PRBs.

46. The method according to claim 39, **characterized in that**, determining, by the terminal, the second time-frequency resources used for transmission of the demodulation reference signals comprises:
determining, by the terminal, that the first demodulation reference signal type is a Type 1 DMRS or a Type 2 DMRS based on that the first time frequency resources comprise an odd number of PRBs.

47. A communication apparatus, **characterized by** comprising: a processing unit, a receiving unit and a sending unit, wherein

the processing unit is configured to generate a sequence of demodulation reference signals; and
the sending unit is configured to map the sequence of the demodulation reference signals to time-frequency resources of the demodulation reference signals for transmission, the time-frequency resources comprising time-frequency resources corresponding to a first code division multiplexing (CDM) group, the first CDM group corresponding to at most eight antenna ports, each of the at most eight antenna ports corresponding to at most four frequency domain weightings and at most two time domain weightings, wherein port weightings of a first antenna port and a second antenna port in the at most eight antenna ports are orthogonal.

48. A communication apparatus, **characterized by** comprising: a processing unit, a receiving unit and a sending unit, wherein

the receiving unit is configured to receive demodulation reference signals sent by a sending device on time-frequency resources of the demodulation reference signals, the time-frequency resources comprising time-frequency resources corresponding to a first code division multiplexing (CDM) group, the first CDM group corresponding to at most eight antenna ports, each of the at most eight antenna ports corresponding to at most four frequency domain weightings and at most two time domain weightings, and port weightings of a first antenna port and a second antenna port in the at most eight antenna ports being orthogonal; and
the processing unit is configured to obtain a sequence of the demodulation reference signals.

49. A communication apparatus, **characterized by** comprising a processor, a memory and a transceiver, wherein

the transceiver receives and sends data under control of the processor;
the memory stores computer instructions; and
the processor is configured to read the computer instructions and execute the method according to any one of claims 1 to 23 or the method according to any one of claims 24 to 46.

50. A non-volatile computer readable storage medium, **characterized in that** the computer readable storage medium stores computer executable instructions, and the computer executable instructions are used for causing a computer to execute the method according to any one of claims 1 to 23, or execute the method according to any one of claims 24 to 46.

**51.** A computer program product, **characterized in that** the computer program product, when called by a computer, causes the computer to execute the method according to any one of claims 1 to 23, or execute the method according to any one of claims 24 to 46.

FIG. 1

CDM Group 1={2,3,6.7}

CDM Group 0={0,1,4,5}

FIG. 2

CDM Group 2={4,5,10,11}

CDM Group 1={2,3,8,9}

CDM Group 0={0,1,6,7}

FIG. 3

Sending device

Receiving device

S401. Generate a sequence of a DMRS

S402. Send the DMRS on time-frequency resources of the DMRS (the time-frequency resources of the DMRS include time-frequency resources corresponding to a first CDM group, the first CDM group corresponds to at most eight antenna ports, each antenna port corresponds to at most four frequency domain weightings and at most two time domain weightings, and antenna port weightings of a first antenna port and a second antenna port are orthogonal)

S403. Receive the DMRS on the time-frequency resources of the DMRS

FIG. 4

FIG. 5

FIG. 6

FIG. 7

S810

Acquire, by a terminal, first time-frequency resources of a DMRS, wherein the first time-frequency resources include a fourth CDM group, a time-frequency resource corresponding to the fourth CDM group includes a first subcarrier group, a part of sub-carriers in the first sub-carrier group is located in a first PRB, and the other part of subcarriers is located in a second PRB

S811

Determine, by the terminal, second time-frequency resources used for DMRS transmission or a first demodulation reference signal type, the second time-frequency resources being the same as the first time-frequency resources or being subsets of the first time-frequency resources

S812

DMRS Send or receive, by the terminal, the DMRS on the second time-frequency resources

FIG. 8a

S820

Determine, by a network device, first time-frequency resources of a DMRS for a terminal, wherein the first time-frequency resources include a fourth CDM group, a time-frequency resource corresponding to the fourth CDM group includes a first subcarrier group, a part of sub-carriers in the first sub-carrier group is located in a first PRB, and the other part of subcarriers is located in a second PRB

S821

Indicate, by the network device, the first time-frequency resources of the DMRS to the terminal

FIG. 8b

Communication apparatus

| Receiving unit 903 | Processing unit 901 | Sending unit 902 |

FIG. 9

1001
Processor

1004
Bus interface

1003
Transceiver

1002
Memory

FIG. 10

**INTERNATIONAL SEARCH REPORT**

| International application No. |
|---|
| **PCT/CN2022/138901** |

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT; CNKI; VEN; ENTXT; 3GPP: 解调参考信号, 码分复用, 序列, 映射, 时频, 天线端口, 8个, 加权, 正交; CDM, DMRS, sequence, mapping, antenna, port, 8, weight, OCC, orthogonal

**C. DOCUMENTS CONSIDERED TO BE RELEVANT**

| Category* | Citation of document, with indication, where appropriate, of the relevant passages | Relevant to claim No. |
|---|---|---|
| X | CN 114079555 A (HUAWEI TECHNOLOGIES CO., LTD.) 22 February 2022 (2022-02-22) description, paragraphs 416-824 and 884-891, and figures 3-4 and 6 | 1-51 |
| X | CN 110890948 A (RESEARCH INSTITUTE OF CHINA MOBILE COMMUNICATIONS CORPORATION; CHINA MOBILE COMMUNICATIONS GROUP CO., LTD.) 17 March 2020 (2020-03-17) description, paragraphs 160-313, and figures 2-5 | 1-51 |
| A | US 2019165873 A1 (FUJITSU LIMITED) 30 May 2019 (2019-05-30) entire document | 1-51 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 February 2023** | **22 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/138901**

| Patent document cited in search report | | | Publication date (day/month/year) | Patent family member(s) | Publication date (day/month/year) |
|---|---|---|---|---|---|
| CN | 114079555 | A | 22 February 2022 | None | |
| CN | 110890948 | A | 17 March 2020 | None | |
| US | 2019165873 | A1 | 30 May 2019 | None | |

Form PCT/ISA/210 (patent family annex) (July 2022)

**EP 4 503 794 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210302779